(19) Europäisches Patentamt / European Patent Office / Office européen des brevets

(11) **EP 3 568 670 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **18700160.7**

(22) Anmeldetag: **10.01.2018**

(51) Int Cl.:
*G01C 21/26* *(2006.01)*        *G01C 21/32* *(2006.01)*
*B60L 15/20* *(2006.01)*        *B60W 20/00* *(2016.01)*
*B60W 20/12* *(2016.01)*        *B60W 50/00* *(2006.01)*
*B60W 50/14* *(2020.01)*

(86) Internationale Anmeldenummer:
**PCT/EP2018/050569**

(87) Internationale Veröffentlichungsnummer:
**WO 2018/130574 (19.07.2018 Gazette 2018/29)**

(54) **VERFAHREN ZUR VORHERSAGE ZUKÜNFTIGER FAHRBEDINGUNGEN FÜR EIN FAHRZEUG**

METHOD FOR PREDICTING FUTURE DRIVING CONDITIONS FOR A VEHICLE

PROCÉDÉ DE PRÉDICTION DES CONDITIONS DE CIRCULATION À VENIR POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2017 EP 17151441**

(43) Veröffentlichungstag der Anmeldung:
**20.11.2019 Patentblatt 2019/47**

(60) Teilanmeldung:
**21182134.3**

(73) Patentinhaber: **Carrosserie Hess AG**
**4512 Bellach (CH)**

(72) Erfinder:
• **NAEF, Alex**
  **4512 Bellach (CH)**
• **GISLER, Hans-Jörg**
  **01-319 Warschau (PL)**
• **WIDMER, Martin**
  **2540 Grenchen (CH)**
• **RITTER, Andreas Heinrich**
  **8037 Zürich (CH)**
• **ELBERT, Philipp Valentin**
  **8006 Zürich (CH)**
• **ONDER, Christopher Harald**
  **8484 Weisslingen (CH)**

(74) Vertreter: **Keller Schneider**
**Patent- und Markenanwälte AG (Bern)**
**Eigerstrasse 2**
**Postfach**
**3000 Bern 14 (CH)**

(56) Entgegenhaltungen:
EP-A1- 2 876 620        WO-A1-2009/098071
DE-A1-102011 117 025    US-A1- 2016 238 396

**Beschreibung**

**Technisches Gebiet**

Die Erfindung betrifft ein Verfahren zur Vorhersage zukünftiger Fahrbedingungen für ein Fahrzeug. Die Erfindung betrifft weiter ein Verfahren zur Steuerung eines Fahrzeugs.

**Stand der Technik**

Die von einem Fahrzeug im Betrieb benötigte Leistung ist von verschiedenen Faktoren abhängig. Neben einem zwei-dimensionalen Routenverlauf sind dabei insbesondere die Topographie (das Höhenprofil der Route) sowie der Geschwindigkeitsverlauf entlang der Route von Bedeutung. Letzterer ergibt sich beispielsweise aus den Strassenverhältnissen, Geschwindigkeitsbegrenzungen und dem Vorhandensein von Ampeln, Kreuzungen, Kreiseln oder Zebrastreifen. Nebst den Antriebsmotoren benötigen zudem auch weitere Verbraucher (z. B. für die Klimatisierung, die Beleuchtung usw.) Energie.

Die verfügbare Leistung bzw. der mitgeführte Energievorrat müssen der benötigten Leistung angepasst sein. Entsprechend sind Energiespeicher sowie -zwischenspeicher wie elektrische Batterien oder Kondensatoren zu dimensionieren und zu laden.

Ist die von einem Fahrzeug zu befahrende Route bzw. ein nächstes Teilstück der Fahrstrecke im Voraus bekannt, lassen sich durch verschiedene Massnahmen, die ortsabhängig und rechtzeitig getroffen werden, der Gesamt-Energieverbrauch, eine maximal benötigte Leistung, eine benötigte Kapazität eines Energiespeichers und/oder eine Belastung eines Antriebs bzw. eines Energiespeichers minimieren. Dadurch verringern sich die Beschaffungs- und/oder Betriebskosten des Fahrzeugs, und die Lebensdauer der genannten Komponenten wird verlängert. Als mögliche zu treffende Massnahmen sind das Aufladen bzw. Befüllen von Energiespeichern, das Betätigen eines Schaltgetriebes, das Einhalten eines energieeffizienten Geschwindigkeitsverlaufs oder die Auswahl eines zu verwendenden Antriebs bei Fahrzeugen mit mehreren Antrieben (insbesondere Hybridfahrzeugen) zu nennen.

Oft ist die befahrene Route nicht im Voraus bekannt. In gewissen Fällen verkehren Fahrzeuge aber wiederholt auf denselben Routen. Dies gilt einerseits für Fahrzeuge, die an einen bestimmten Fahrweg gebunden sind (z. B. Schienenfahrzeuge, Oberleitungsbusse) oder eine bestimmte Route bedienen müssen (z. B. Omnibusse im Liniendienst). Andererseits gilt dies auch für Fahrzeuge, mit welchen unabhängig von solchen Vorgaben regelmässig dieselben Routen befahren werden, z. B. zum Pendeln zwischen Wohnort und Arbeitsplatz.

Die DE 10 2011 117 025 A1 (Voith Patent) betrifft ein Verfahren zum Steuern des Betriebs eines Fahrzeugs, wobei der Fahrzeugantrieb und/oder Aggregate des Fahrzeugs in Abhängigkeit von Steuereingangsgrössen gesteuert werden. Das Verfahren ist insbesondere zum Einsatz mit Verkehrsmitteln geeignet, die wiederholt dieselben Fahrtstrecken bewältigen, z. B. Fahrzeuge im Linienverkehr. Die Fahrzeugposition wird laufend erfasst und der Fahrzeug-, Motor- und/oder Getriebesteuerung übermittelt, damit diese ihre Steuerung in Abhängigkeit von der Position anpassen. Bei Hybridfahrzeugen kann das Energiemanagement in Abhängigkeit der gespeicherten Streckenprofile arbeiten. Betriebsdaten des Fahrzeugs (z. B. Geschwindigkeit oder Beschleunigung) werden während eines Durchfahrens erfasst und der Position zugeordnet; bei einem späteren Durchfahren derselben Position wird die Steuerung in Abhängigkeit dieser erfassten Betriebsdaten ausgeführt. Bei mehrmaligem Befahren können die Betriebsdaten mehrfach erfasst und ein Mittelwert der erfassten Betriebsdaten gespeichert werden. Den Positionen können zusätzlich aktuelle Streckendaten (z. B. Steigung bzw. geodätische Höhe) zugeordnet werden; auch diese können mittels am Fahrzeug befindlicher Sensoren erfasst werden. Das Verfahren ermöglicht eine selbstständige Entwicklung einer Topographiekarte. Näheres über den spezifischen Aufbau und die Struktur einer solchen Karte ist nicht offenbart.

Der Artikel "Predictive Reference Signal Generator for Hybrid Electric Vehicles" (D. Ambühl, L. Guzzella), IEEE Transactions on Vehicular Technology Vol. 58, No. 9, November 2009 ist auf das Energiemanagement von Hybridfahrzeugen gerichtet, also Fahrzeugen mit Verbrennungs- und Elektromotor, insbesondere in Situationen, wo derartige Fahrzeuge regelmässig dieselbe Strecke abfahren. Gegenstand des Artikels ist ein Antrieb, bei welchem der Verbrennungs- und der Elektromotor auf dieselbe Welle wirken, so dass sich ihre Drehmomente addieren. Ziel ist die Minimierung des Treibstoffverbrauchs, wobei durch die Festlegung von Grenzen des Ladestandes (SoC) sichergestellt wird, dass die Batterie nicht über Gebühr belastet wird.

Die Regelung umfasst ein Vorhersagemodul, welches Daten u. a. von einem Navigationsassistenzsystem bezieht, sowie ein über den Ladezustand der Batterie als Zustandsvariable gesteuertes Modul zum Generieren eines Äquivalenzfaktors, welcher die Drehmomentverteilung zwischen Elektro- und Verbrennungsmotor angibt.

Allerdings fehlen oft vollständige Informationen, welche für die gewünschte Optimierung notwendig sind; jedenfalls sind diese nicht allesamt Teil der üblicherweise verfügbaren Daten von Navigationsassistenzsystemen. Navigationsassistenzsysteme sind zudem in der Regel nicht auf Verkehrsmittel wie z. B. Omnibusse oder Oberleitungsbusse ausgerichtet, entsprechend können sie keine zuverlässigen Aussagen zu erwarteten Geschwindigkeiten, Haltezeiten usw. machen. Somit werden für eine zuverlässige Vorhersage Karten mit weitergehendem Informationsgehalt in Bezug auf die befahrenen Routen benötigt.

Es sind verschiedene Ansätze zum Generieren von Karten bekannt. Ein erster ist das so genannte "collaborative mapping". Dabei werden Daten (Navigations- und andere Sensordaten) von mobilen Endgeräten freiwilliger Nutzer gesammelt und offline zentral verarbeitet. Weil die Daten von einer Vielzahl unterschiedlicher Endgeräte stammen, ist die Qualität und Einheitlichkeit nicht zwingend gegeben. Üblicherweise ist eine manuelle Nachbearbeitung notwendig. Ein zweiter Ansatz bedient sich einer Mehrzahl gleich ausgebildeter Geräte, mit denen im zu kartierenden Gebiet Messungen durchgeführt werden. Deren Einsatz und die Offline-Auswertung der Messdaten ist aber aufwendig. Ein dritter Ansatz bedient sich selbstfahrender Roboter oder Automobile, welche Sensordaten sammeln. Auch hier ist das Sammeln der Daten aufwendig und die Generierung der Karte erfolgt offline, d. h. nach abgeschlossener Sammlung der Daten, typischerweise auf einem zentralen Rechner.

Die EP 2 876 620 A1 (Nissan Motor Company, Limited) betrifft ein System und ein Verfahren zur Fahrerassistenz. Dabei werden Fahrerinformationen (wie Blickrichtung, Puls, Bewegungen usw.) gesammelt und in Abhängigkeit davon Karteninformationen aufgebaut und aktualisiert, indem die Fahrerinformationen als ortsabhängige Zeitreihe statistisch verarbeitet werden. Es werden zudem Fahrzeuginformationen (z. B. Geschwindigkeit, Beschleunigungen usw.) erfasst. Zum Aufbau der Karteninformationen werden die Ergebnisse der statistischen Verarbeitung Positionsinformationen zugeordnet. Die Fahrerassistenz erfolgt durch die Ausgabe entsprechender Informationen an den Fahrer oder die Steuerung des Fahrzeugs. In einer entsprechenden Karte können Strassen durch Verbindungen, Kreuzungen sowie Verzweigungen durch Knoten repräsentiert werden. Wird beim erneuten Durchfahren in der Zeitreihe ein Verlauf erkannt, der einem bereits gespeicherten Muster gleicht, so wird das gespeicherte Muster aktualisiert, ansonsten wird ein neues Muster erzeugt und gespeichert. Die Vorhersage wird anhand der Übergangswahrscheinlichkeiten von einem erkannten (bekannten) Muster zu einem weiteren (bekannten) Muster getroffen.

Die WO 2009/098071 A1 (FKFS Forschungsinstitut für Kraftfahrwesen und Fahrzeugmotoren Stuttgart) betrifft eine Vorrichtung zur Erfassung und Bereitstellung von Informationen über Fahrsituationen entlang einer Fahrstrecke, mit einer Sensoreinrichtung zur Erfassung von Fahrzustandsgrössen entlang der Fahrstrecke, einer Einrichtung zur Erfassung der Fahrzeugposition und einer Speichereinrichtung. Die Fahrzustandsgrössen umfassen beispielsweise eine Gierrate, die Fahrzeuggeschwindigkeit, eine aktuelle Motordrehzahl bzw. die Motorlast, die Fahrzeuglängsbeschleunigung oder die Fahrzeugneigung. Nach Möglichkeit werden zur Gewinnung dieser Grössen vorhandene Systeme wie ESP eingesetzt. Aus den erfassten Fahrzustandsgrössen werden Fahrsituations-Informationen abgeleitet; diese werden dann zusammen mit der entsprechenden Position gespeichert, so dass ein Fahrtprotokoll gebildet wird. Eine Aufteilung in Teilstrecken und der Aufbau eines Wegnetzes mit Knotenpunkten und Kanten findet nicht statt. Die Fahrsituations-Informationen können beim erneuten Befahren dieser Fahrstrecke zur Unterstützung des Fahrers und/oder direkt von den Steuer- und Regelsystemen des Fahrzeugs genutzt werden. Eine bereits gespeicherte Abfolge von Fahrsituationen wird manuell vom Fahrer oder automatisch von einer weiteren Einrichtung ausgewählt. Beim erneuten Auftreten von gespeicherten Fahrsituationen werden die gespeicherten Daten aktualisiert oder präzisiert.

Die US 2016/238396 A1 (TomTom) betrifft Verfahren zur Aktualisierung von Karten (insbesondere Strassen- und Wegekarten) basierend auf Messdaten, insbesondere erhoben durch persönliche Navigationsgeräte. Dazu werden Liniensegmente einer vorhandenen Karte mit einer Gewichtung versehen, GPS-Pfade werden dann - sofern sie ein Matching-Kriterium erfüllen - mit den vorhandenen Segmenten kombiniert, wobei bei der Mittelwertbildung die Gewichtung berücksichtigt wird. Das Verfahren soll das Erkennen von Verzweigungen und Kreuzungen verbessern.

## Darstellung der Erfindung

Aufgabe der Erfindung ist es, ein dem eingangs genannten technischen Gebiet zugehörendes Verfahren zu schaffen, welches eine zuverlässige Vorhersage zukünftiger Fahrbedingungen für ein Fahrzeug ermöglicht.

Die Lösung der Aufgabe ist durch die Merkmale des Anspruchs 1 definiert. Gemäss der Erfindung umfasst das Verfahren folgende Schritte:

a) Sammeln von Sensordaten mittels Sensoren an Bord des Fahrzeuges, während des Befahrens einer Route durch das Fahrzeug;

b) Bestimmen einer Position des Fahrzeugs;

c) Zuordnen der gesammelten Daten zur bestimmten Fahrzeugposition;

d) Erstellen einer Karte in Abhängigkeit der zugeordneten Daten;

e) erneutes Befahren der Route, wobei die Karte in Abhängigkeit von zugeordneten Daten aus dem erneuten Befahren in Echtzeit aktualisiert wird; und

f) Gewinnen einer Vorhersage zukünftiger Fahrbedingungen, beim erneuten Durchfahren der Strecke basierend auf der bestimmten Fahrzeugposition und der Karte;
wobei die Karte durch einen gerichteten Graphen dargestellt wird, wobei jedem Knoten des Graphen zugeordnete Daten zugewiesen werden; und wobei für jeden neuen Satz zugeordneter Daten in Abhängigkeit einer Distanz zu einem letzten besuchten Knoten des Graphen und eines Inhalts eines Datenpuffers

- der Satz zugeordneter Daten als Eintrag dem Datenpuffer hinzugefügt wird, wenn die Distanz einen vorgegebenen Wert unterschreitet,

- der Satz zugeordneter Daten dem letzten besuchten Knoten hinzugefügt wird, wobei ein Eintrag oder mehrere Einträge im Datenpuffer mit geeigneter Mittelung dem letzten besuchten Knoten hinzugefügt werden, wenn die Distanz den vorgegebenen Wert überschreitet und der Datenpuffer mindestens einen Eintrag aufweist, oder

- ein neuer Knoten erzeugt wird, wenn die Distanz den vorgegebenen Wert überschreitet und der Datenpuffer leer ist.

Die aktuelle Position des Fahrzeugs lässt sich insbesondere anhand eines globalen Positionierungssystems (GNSS, wie z. B. GPS, GLONASS, Galileo, Beidou etc.) bestimmen. Die Sensordaten werden von Sensoren an Bord des Fahrzeugs generiert, wobei diese Teil der ohnehin vorhandenen Elektronik des Fahrzeugs und/oder zusätzlich angebracht sein können. Die Sensordaten umfassen beispielsweise die Fahrgeschwindigkeit oder den momentanen Energieverbrauch. Sie werden im Rahmen des Verfahrens der bestimmten Fahrzeugposition zugeordnet und schliesslich in die Karte integriert. Letztlich ordnet die Karte Positionen des Fahrzeugs einen oder mehrere Parameter zu, wobei diese Parameter den gesammelten Sensordaten entsprechen und/oder von diesen abgeleitete Grössen sein können. Die gemäss dem erfindungsgemässen Verfahren erstellte Karte deckt nicht ein zusammenhängendes ausgedehntes zwei-dimensionales Gebiet ab, sondern lediglich Orte, die (bisherigen) Fahrstrecken des Fahrzeugs entsprechen, wobei es grundsätzlich möglich ist, die Karte mit weiteren Elementen zu ergänzen, die aus einer anderen Quelle stammen, z. B. aus einer Datenbank mit Kartendaten, die von anderen Fahrzeugen gewonnen wurden. Diese Ergänzung kann zu Beginn stattfinden, im Sinn einer Initialisierung der Karte, oder auch erst wenn bereits eine Karte erfindungsgemäss aufgebaut wurde.

Eine Aktualisierung in Echtzeit bedeutet im vorliegenden Fall, dass die Karte spätestens nach Absolvieren der Route in aktualisierter Form vorliegt, es ist also keine zeitlich nachgelagerte Bearbeitung notwendig. Bevorzugt erfolgt aber die Aktualisierung Schritt für Schritt während des Befahrens, so dass stets derjenige Ausschnitt der Karte, welcher dem bereits befahrenen Abschnitt der Route entspricht, im Wesentlichen bereits in aktualisierter Form vorliegt.

Das erfindungsgemässe Verfahren ermöglicht einen automatischen Aufbau der Karte. Es besteht grundsätzlich keine Notwendigkeit für eine vorgängige externe Datenerfassung. Wird auf dem Fahrzeug eine Einrichtung mitgeführt, die die Sensordaten und Daten zur Bestimmung der Fahrzeugposition (bzw. die bestimmte Fahrzeugposition) erhält und in erfindungsgemässer Weise verarbeitet, wird die Karte für die befahrene Route automatisch erzeugt und bei jedem erneuten Befahren automatisch auf der Basis neuer zugeordneter Daten aktualisiert. Dadurch wird sie automatisch an geänderte Bedingungen (Umleitungen, Baustellen usw.) angepasst, und allfällige Fehler werden aufgrund einer besseren Statistik reduziert. Das Verfahren zum Aufbau und zur Aktualisierung der Karte ist also selbstlernend.

Das erfindungsgemässe Verfahren kann durch das Sammeln geeigneter Sensordaten und das Speichern geeigneter Parameter Umständen Rechnung tragen, welche für das eingesetzte Fahrzeug und den Einsatzzweck spezifisch sind. So werden z. B. im Fall von öffentlichen Verkehrsmitteln die spezifische Fahrdynamik des Fahrzeugs, typische Haltezeiten, das Passagieraufkommen (und damit die jeweilige Nutzlast), das Verkehrsaufkommen auf bestimmten Streckenabschnitten (und ggf. zu bestimmten Tageszeiten) usw. automatisch berücksichtigt, wenn z. B. Geschwindigkeits- und Leistungsdaten gemessen und in der Karte gespeichert werden. Weil bereits beim Sammeln der Daten fahrzeugspezifische Aspekte mit berücksichtigt werden, kann sich die Definition eines Modells des Fahrzeugs, um z. B. aus topografischen Daten die vom spezifischen Fahrzeug in einem bestimmten Streckenabschnitt benötigte Leistung zu berechnen, erübrigen.

Das Verfahren eignet sich somit besonders gut für öffentliche Transportmittel, z. B. Omnibusse oder Oberleitungsbusse. Es kann aber auch im Zusammenhang mit anderen Strassen- oder Schienenfahrzeugen zum Personen- oder Gütertransport eingesetzt werden.

Das erfindungsgemässe Verfahren ist besonders gut zur Vorhersage zukünftiger Fahrbedingungen von Fahrzeugen geeignet, welche auf vorgegebenen Routen verkehren (z. B. Omnibusse, Linienbusse o. ä.). Das Verfahren ist aber auch dann von Nutzen, wenn nur ab und zu die gleiche Route gefahren wird, und diese nicht vorgegeben ist, sondern nach Bedarf gewählt wurde. Dies ist beispielsweise bei Personenfahrzeugen privater Haushalte der Fall. Gemäss Statistiken werden damit über die Hälfte der Strecken auf denselben Strassen zurückgelegt, da die Ziele wie Arbeitsort, Sportstudio, Einkaufsmöglichkeit, Ferienort, etc. immer etwa dieselben sind. Schon auf einer Durchfahrt lassen sich mit Hilfe des Verfahrens Informationen gewinnen, die für die Vorhersage zukünftiger Fahrbedingungen und somit für die Steuerung des Fahrzeugs beim erneuten Durchfahren der Strecke wertvoll sind.

Mit Vorteil umfasst die Karte ortsabhängige Leistungsdaten. Mit "Leistungsdaten" sind hier diejenigen Daten gemeint, welche für die von den Verbrauchern des Fahrzeugs (insbesondere Antriebsmotoren) bezogene Leistung relevant sind. Darunter fallen unmittelbare Leistungsdaten, wie momentaner Stromverbrauch (elektrische Leistung) oder Treibstoffverbrauch, sowie mittelbare Leistungsdaten, welche in Kombination mit anderen Parametern eine Vorhersage der Leistung erlauben, z. B. die Motordrehzahl, die Fahrgeschwindigkeit, eine gemessene Steigung usw.

Mit Vorteil umfasst die Aktualisierung der Karte das Konsolidieren von Daten aus verschiedenen Fahrten. Bei jeder weiteren Fahrt wird also die Karte verbessert, es werden also die Positionen und zugeordneten Parameter unter Einbezug der bereits früher erfassten und zugeordneten Daten und der neuen zugeordneten Daten angepasst.

Alternativ können bei der Aktualisierung die vorher in der Karte abgelegten Positionen und/oder die Parameter oder gewisse Teilmengen davon durch die aktuellen Werte ersetzt werden.

Mit Vorteil umfassen die gesammelten Sensordaten ortsrelevante Informationen. Zur Bestimmung der Fahrzeugposition werden dann einerseits die gesammelten Sensordaten (oder ein Teil davon) und andererseits Daten eines globalen Positionierungssystems zur Bestimmung der Fahrzeugposition herangezogen und kombiniert. Diese Verarbeitung lässt sich insbesondere mittels eines Kalman-Filters gut umsetzen. Weil nicht nur die mit Rauschen behafteten Daten des globalen Positionierungssystems herangezogen werden, sondern auch zusätzliche Sensordaten, ergibt sich eine verbesserte Positionsbestimmung. Es versteht sich von selbst, dass nicht alle gesammelten Sensordaten in den Kalman-Filter einfliessen müssen, sondern nur diejenigen, welche einen Beitrag zur Verbesserung der Ortsbestimmung leisten. Bevorzugt wird jeweils nicht nur eine Fahrzeugposition bestimmt, sondern auch eine Fahrtrichtung (Orientierung) des Fahrzeugs an dieser Fahrzeugposition.

Die Berücksichtigung der weiteren Sensordaten ist besonders dann von grossem Vorteil, wenn das globale Positionierungssystem keine oder nur sehr ungenaue Informationen liefert, z. B. in Tunnels oder bei der Beschattung durch hohe Gebäude.

Anstelle des Kalman-Filters können andere Verfahren für die so genannte "Koppelnavigation" (oder "Dead Reckoning") herangezogen werden, z. B. andere Filter wie Partikel-Filter (sequenzielle Monte-Carlo-Methoden) o. ä.

Alternativ erfolgt die Positionsbestimmung ausschliesslich auf der Basis von Daten des globalen Positionierungssystems oder auf der Basis dieser Daten und z. B. Daten einer vorhandenen, vom erfindungsgemässen System unabhängigen Karte (z. B. eines Navigationsassistenzsystems).

Mit Vorteil umfassen die zugeordneten Daten eine Fahrzeugorientierung und eine Fahrzeuggeschwindigkeit. Diese Daten sind für die weitere Aktualisierung der Karte sowie für das Treffen von Vorhersagen nützlich, sie lassen sich zudem auf Basis der verfügbaren Sensor- und Positionierungssystemsignale einfach ableiten. Nebst diesen Daten können weitere Daten zugeordnet werden.

Bei einer ersten Variante des erfindungsgemässen Verfahrens repräsentieren die zugeordneten Daten normalverteilte Grössen, wobei nebst einem Mittelwert der jeweiligen Grösse auch eine Standardabweichung in der Karte abgelegt wird. Dies vereinfacht sowohl die Konsolidierung mehrerer Daten aus verschiedenen Durchfahrten als auch das Treffen von Vorhersagen.Es können auch andere Verteilungen und charakteristische Parameter herangezogen werden.

Bei einer zweiten Variante des erfindungsgemässen Verfahrens werden die zugeordneten Daten jeweils in der Karte abgelegt, bevorzugt mit einer Zeit- und Datumsangabe versehen. Pro Durchfahrt und Parameter wird somit ein zusätzliches Datum abgelegt. Dies ergibt zusätzliche Freiheitsgrade beim Auslesen von prädiktiven Daten aus der Karte. Es wird z. B. möglich, nur Datenpunkte zu berücksichtigen, welche ein gewisses Zeitintervall betreffen oder eine gewisse Tages- oder Jahreszeit, oder Datenpunkte auszuschliessen, welche einer anderen Buslinie zugeordnet sind. Ferner werden Fehler durch die Annäherung der Verteilung durch eine vorgegebene Verteilung vermieden.

Sowohl in der ersten als auch in der zweiten Variante können die Daten mehreren Klassen zugeordnet werden, z. B. Tageszeiten, Wochentagen oder Jahreszeiten, so dass für die spätere Vorhersage die Daten der relevanten Klasse herangezogen werden können.

Bevorzugt umfassen die Sensordaten Geschwindigkeiten eines rechten und eines linken Rads, und ausgehend von den Geschwindigkeiten wird eine Änderungsrate der Fahrzeugorientierung errechnet. Derartige Geschwindigkeitsdaten werden üblicherweise von der Fahrzeugelektronik erfasst und sind über einen normierten Bus (z. B. CAN-Bus) verfügbar. Die Geschwindigkeiten können in absoluter Form vorliegen oder aber als Differenzgeschwindigkeiten zur Geschwindigkeit der jeweiligen Achse. In jedem Fall liefert eine Differenz zwischen der Radgeschwindigkeit und der Achsgeschwindigkeit Informationen über Richtungsänderungen.

Es hat sich herausgestellt, dass die relativen Geschwindigkeiten der Räder auf der Vorderachse für die weitere Verarbeitung im Rahmen des erfindungsgemässen Verfahrens besonders gut geeignet sind.

Die Karte wird durch einen gerichteten Graphen dargestellt, wobei jedem Knoten des Graphen zugeordnete Daten zugewiesen werden. Der Knoten wird also durch seine räumliche Position und die zugewiesenen Daten (z. B. leistungsbezogene Daten, Fahrtrichtung usw.) definiert. Die Darstellung als gerichteter Graph ist der im Rahmen des erfindungsgemässen Verfahrens (mehrfach) befahrenen Route bestmöglich angepasst. Gegenüber anderen Darstellungsformen, z. B. in einem fest vorgegebenen Gitternetz, hat die Repräsentation durch einen Graphen den Vorteil, dass sich diese viel flexibler den realen Routen anpasst: In Innenstädten ist die Dichte an Strassen hoch, was ein enges Gitter notwendig macht, dieses wäre dann für andere Abschnitte im Umland viel zu detailliert. Der Graph kennt solche Probleme nicht.

Bei jedem erneuten Befahren der Route wird der Graph aktualisiert, d. h. die räumliche Position und/oder die den Knoten zugewiesenen Daten werden angepasst, es werden neue Knoten erzeugt oder vorhandene Knoten entfernt bzw. zusammengefasst. Die Route entspricht letztlich einer Abfolge von jeweils direkt miteinander verbundenen Knoten, entlang den verbindenden Kanten. Insofern sind der Startpunkt der Route, welcher durch einen Knoten des Graphen repräsentiert wird, und der Endpunkt der Route, welcher durch einen anderen oder (im Fall eines Rundkurses) denselben Knoten repräsentiert wird, durch einen Pfad im gerichteten Graphen miteinander verbunden. Der Graph kann Verzweigungen aufweisen, die realen Verzweigungen im Strassen- oder Schienensystem entsprechen oder aber aufgrund von Messungenauigkeiten entstanden sind (und somit bei einer späteren Durchfahrt möglicherweise wieder verschwinden). Bei einer Route, die in beiden Richtungen befahren wird, werden beide Fahrtrichtungen durch unterschiedliche Knoten und Kanten repräsentiert, damit fahrtrichtungsabhängige Einflüsse (z. B. Steigungen/Gefälle) erfasst werden können. Dazu kann es sinnvoll sein, den einzelnen Knoten insbesondere eine Orientierung des Fahrzeugs zuzuordnen.

Jeder Kante kann die Anzahl der erfassten Fahrten auf dem entsprechenden Streckenabschnitt zugeordnet sein. Dies kommt einer Gewichtung der entsprechenden Kanten gleich.

Für jeden neuen Satz zugeordneter Daten wird in Abhängigkeit einer Distanz zu einem letzten besuchten Knoten des Graphen und eines Inhalts eines Datenpuffers bestimmt, ob

    a) der Satz zugeordneter Daten dem Datenpuffer hinzugefügt wird, ob

    b) der Satz zugeordneter Daten dem letzten besuchten Knoten hinzugefügt wird oder ob

    c) neue Knoten erzeugt werden.

Ein Satz zugeordneter Daten umfasst namentlich Angaben zur Fahrzeugposition (z. B. Längen- und Breitengrad) und die der Fahrzeugposition zugeordneten Daten.

Bei der Variante c) können dabei nur ein neuer Knoten oder mehrere neue Knoten gleichzeitig erzeugt werden.

Das Vorgehen gemäss Variante a) erfolgt dann, wenn die Distanz zwischen der bestimmten Fahrzeugposition und der dem letzten besuchten Knoten zugeordneten Position einen gewissen vorgegebenen Wert (Sample-Distanz) unterschreitet, was z. B. im Stillstand oder bei sehr langsamer Fahrt auftritt. Es wird in diesem Fall davon ausgegangen, dass der Satz zugeordneter Daten letztlich dem letzten besuchten Knoten hinzugefügt werden soll. Weil noch nicht feststeht, ob noch weitere Daten ebenfalls dem letzten besuchten Knoten hinzugefügt werden, erfolgt die Zwischenspeicherung im Datenpuffer.

Somit erfolgt das Vorgehen gemäss Variante b), wenn die Distanz den vorgegebenen Wert überschreitet und der Datenpuffer mindestens einen Eintrag aufweist. Sind mehrere Einträge vorhanden, erfolgt eine geeignete Mittelung, bevor der Satz dem letzten besuchten Knoten hinzugefügt wird.

Ist schliesslich die Distanz grösser als der vorgegebene Wert, der Puffer aber leer, so wird ein neuer Knoten erzeugt. Diesem wird dann der Satz zugeordneter Daten hinzugefügt Durch die vorgenannten Schritte werden die zunächst einem Zeitpunkt zugeordneten Daten jeweils örtlichen Positionen zugeordnet. Daten mehrerer Durchfahrten der Route lassen sich so besser kombinieren.

Mit Vorteil werden beim Überschreiten einer vorgegebenen Maximaldistanz zum letzten besuchten Knoten mindestens zwei neue Knoten erzeugt, wobei einem ersten der mindestens zwei neuen Knoten ein Satz interpolierter Daten zugeordnet wird. Dies vermeidet einen zu grossen Abstand benachbarter Knoten, namentlich dann, wenn die Positionsbestimmung des Fahrzeugs in vorgegebenem zeitlichem Abstand erfolgt und die Fahrgeschwindigkeit relativ hoch ist. Bereits beim initialen Aufbau der Karte bei der ersten Durchfahrt werden zudem im Wesentlichen ausreichend viele Knoten erzeugt, um die gewünschte räumliche Auflösung zu erreichen.

Bevorzugt wird in Abhängigkeit der bestimmten Fahrzeugposition und der Karte eine Vorhersage von zukünftigen ortsabhängigen Parametern auf der befahrenen Route getroffen, wobei die Vorhersage ausgehend von einem Knoten des gerichteten Graphen getroffen wird, welcher der bestimmten Fahrzeugposition entspricht. Von Interesse sind namentlich Parameter, die relevant sind für eine benötigte Antriebsleistung (z. B. unmittelbare Leistungsdaten, Geschwindigkeiten o. ä.). Die Parameter können Teil der den Knoten zugeordneten Daten sein oder davon abgeleitete Grössen.

Bevorzugt erstreckt sich die Vorhersage über einen Vorhersagebereich, welcher eine Mehrzahl von Knoten des gerichteten Graphen überdeckt, wobei im Fall, dass sich der Vorhersagebereich über eine Verzweigung des gerichteten Graphen hinaus erstreckt, Knoten mehrerer an die Verzweigung anschliessender Äste für das Treffen der Vorhersage berücksichtigt werden. Dies ermöglicht Aussagen, auch wenn nicht bekannt ist, welchem Ast das Fahrzeug im weiteren Verlauf der Route folgen wird. Die Berücksichtigung mehrerer Äste kann auf verschiedene Art und Weise erfolgen: So kann beispielsweise eine Mittelwertbildung über die verschiedenen Äste stattfinden. Es können aber auch zunächst Werte für alle berücksichtigten Äste bestimmt und ein ausgezeichneter Wert (z. B. Minimum, Maximum oder Median) für die weitere Berechnung herangezogen werden. Wird beispielsweise die in einem bestimmten Abschnitt benötigte Leistung prognostiziert, um einen minimalen Ladestand einer Batterie zu ermitteln, dürfte es sinnvoll sein, denjenigen Ast heranzuziehen, welcher den höchsten Energiebedarf aufweist, um sicherzustellen, dass die in der Batterie gespeicherte Energie in jedem Fall ausreicht.

Bevorzugt wird eine neue Vorhersage nur dann getroffen, wenn der Vorhersagebereich einer bereits getroffenen Vorhersage nicht mindestens einen minimalen Routenabschnitt ausgehend von der bestimmten Fahrzeugposition überdeckt. Ansonsten wird eine bereits getroffene Vorhersage weiter verwendet. Das Treffen einer neuen Vorhersage ist also nicht beim Erreichen jedes neuen Knotens notwendig, sondern nur bei einer Teilmenge der Knoten. Dadurch lässt sich der Rechenaufwand minimieren.

Mit Vorteil wird eine neue Vorhersage ausgehend von einem Knoten getroffen, welcher sich vor einer Verzweigung des gerichteten Graphen befindet, wenn sich der der bestimmten Fahrzeugposition entsprechende Knoten in einem vorgegebenen Abstandsbereich nach dieser Verzweigung befindet.

Im unmittelbaren Anschluss an eine Verzweigung lässt sich - z. B. aufgrund von Ortungsungenauigkeiten - nämlich oft nicht zweifelsfrei erkennen, welchem Ast das Fahrzeug folgt. Wenn nun nach Erreichen eines Knotens, welcher einer Verzweigung entspricht, unmittelbar eine neue Vorhersage getroffen wird, bezieht sich diese nur noch auf den festgestellten, aber möglicherweise unzutreffenden Ast des Graphen. Andere Äste, für welche ebenfalls eine nicht unerhebliche Wahrscheinlichkeit besteht, dass ihnen das Fahrzeug folgt, fallen unmittelbar aus der Prognostizierung heraus. Stimmt der festgestellte Ast nicht, resultieren falsche Prognosen. Wenn nur dann neue Vorhersagen getroffen werden, wenn seit der letzten Verzweigung ein gewisser Abstandsbereich überwunden wird, können derartige Fehlprognosen weitgehend vermieden werden.

Falls im vorgegebenen Abstandsbereich nach einer Verzweigung die vorhandene Vorhersage den minimalen Routenabschnitt nicht mehr abdeckt, wird zweckmässigerweise eine neue Prognose erzeugt, ausgehend vom Knoten, welcher die Verzweigung darstellt (oder einem Knoten, welcher der Verzweigung vorgeordnet ist und von diesem einen kleinen Abstand aufweist). Dies erweitert den abgedeckten Routenabschnitt und stellt gleichzeitig sicher, dass die weiteren möglichen Alternativen, was die weitere Route anbelangt, weiterhin berücksichtigt sind.

Mit Vorteil wird das erfindungsgemässe Verfahren zur Vorhersage zukünftiger Fahrbedingungen in einem Verfahren zur Steuerung eines Fahrzeugs verwendet. Dabei erfolgt die Steuerung anhand einer Karte, welche durch das erfindungsgemässe Verfahren erzeugt worden ist.

Das Verfahren zur Steuerung ist insbesondere für Fahrzeuge geeignet, welche mindestens einen elektrischen Antriebsmotor umfassen. Ein solches Fahrzeug umfasst beispielsweise zwei (oder mehr) unterschiedliche Stromquellen. Eine davon kann eine Speicherbatterie sein, die sich bei entsprechendem Energieangebot aufladen lässt und einen autonomen Fahrbetrieb des Fahrzeugs zumindest auf Teilstrecken ermöglicht.

Die Steuerung ermöglicht unter anderem:

a) die Sicherstellung eines ausreichenden Ladestands der Speicherbatterie für die zu bewältigende Route;

b) die Optimierung des Ladezustands im Hinblick auf eine bestmögliche Lebensdauer;

c) die Minimierung des Gesamtenergiebedarfs; und/oder

d) die gezielte Steuerung weiterer Verbraucher (z. B. Heizung, Lüftung, Klima) in Abhängigkeit des Leistungsbedarfs der Fahrmotoren.

Das Verfahren zur Steuerung lässt sich aber auch bei Fahrzeugen einsetzen, die einen Verbrennungsmotor oder einen Elektromotor mit nur einer Stromquelle aufweisen. Bei einer Anwendung in Lastwagen werden beispielsweise relevante Informationen für die optimale Geschwindigkeitsregelung auf hügeligem Terrain bereitgestellt, wie z. B. Höhenangaben zur bevorstehenden Strecke. Das sogenannte "Adaptive Cruise Control" variiert beim Fahren mit Tempomat die Geschwindigkeit innerhalb einer gewissen Bandbreite und ermöglicht dadurch die Einsparung von Energie. Beispielsweise wird bergab die Geschwindigkeit leicht erhöht, um mehr von der potenziellen Energie aufzunehmen, welche normalerweise "verbremst" werden müsste. Bevor der LKW in einen bergabführenden Streckenabschnitt einfährt, was aufgrund der durch das erfindungsgemässe Verfahren erzeugten Karte festgestellt werden kann, kann somit die Geschwindigkeit leicht abgesenkt werden, um dann noch mehr von der potenziellen Energie in der Bergab-Fahrt aufnehmen zu können.

Bei einer weiteren Anwendung im Zusammenhang mit Personenwagen werden relevante Informationen für die Regelung von "Real-Driving"-Emissionen gewonnen. Prädiktive Informationen ermöglichen nämlich eine optimierte Regelung von Verbrennungsmotoren und Abgasnachbehandlungssystemen. Beispielsweise kostet die Regeneration eines vollgeladenen Partikelfilters beim städtischen Fahren zusätzlichen Kraftstoff, um die Abgastemperatur zu erhöhen. Auf der Autobahn hingegen läuft der Motor mit höherer Last und die Abgastemperatur ist schon hoch genug, so dass der Partikelfilter von alleine beginnt, sich zu regenerieren. Anhand der prädiktiven Informationen aus der Karte kann somit die Regeneration des Partikelfilters unter Umständen von der Stadtfahrt auf die Autobahnfahrt verlegt werden.

Die Karte kann insbesondere in einem Optimierungsverfahren verwendet werden, welches den gesamten Fahrzyklus oder wesentliche Teile davon berücksichtigt.

In einer bevorzugten Anwendung ist das Fahrzeug ein Oberleitungsbus mit einer Speicherbatterie zur Zwischenspeicherung von elektrischer Energie. Der Oberleitungsbus kann Fahrenergie direkt von der Oberleitung oder von der Speicherbatterie beziehen. Dies ermöglicht u. a. das Verkehren auf Netzabschnitten, die nicht mit einer Oberleitung versehen sind. Die Speicherbatterien können während der Fahrt (von der Oberleitung) oder im Stillstand (Haltestelle, Depot) nachgeladen werden.

Die Steuerung des Fahrzeugs kann direkt und automatisch oder auch indirekt erfolgen. Sie kann insbesondere folgende Massnahmen allein oder in Kombination umfassen:

i) die automatische Wahl eines zu verwendenden Antriebs bzw. einer für einen Antrieb verwendeten Stromquelle,

ii) die Ladesteuerung für eine Speicherbatterie,

iii) das automatische Schalten eines Schaltgetriebes

iv) die Ausgabe von Fahrerassistenzinformationen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1        Eine schematische Darstellung einer Anwendung des erfindungsgemässen Verfahrens;

Fig. 2        eine schematische Darstellung der Struktur des Positionsabschätzers;

Fig. 3        ein Flussdiagramm des Aufbaus der Karte;

Fig. 4A, B    eine schematische Darstellung der Karte einer durch einen Tunnel führenden Trajektorie vor und nach einem Korrekturschritt; und

Fig. 5        eine schematische Darstellung der Vorhersage von zukünftigen Fahrbedingungen.

Grundsätzlich sind in den Figuren gleiche Teile mit gleichen Bezugszeichen versehen.

**Wege zur Ausführung der Erfindung**

Im Folgenden sind eine Ausführungsform und eine Anwendung des erfindungsgemässen Verfahrens im Detail beschrieben. Sie betrifft Busse für den Personentransport, insbesondere im Liniendienst, namentlich Busse, welche mindestens einen elektrischen Antriebsmotor umfassen und mindestens zwei Stromquellen aufweisen (z. B. eine Fahrbatterie und eine Oberleitungsspeisung) und/oder nebst dem elektrischen Antriebsmotor auch noch einen weiteren Antriebsmotor mit anderer Antriebstechnologie (z. B. einen Verbrennungsmotor) aufweisen (sog. hybrid-elektrische Busse).

Moderne Passagierbusse 1 umfassen eine Reihe von Sensoren 3, die an Mikrocontroller angeschlossen sind. Letztere kommunizieren miteinander über einen sog. CAN-Bus 7 (controller area network bus). Über diesen Bus kann auf im Wesentlichen alle gemessenen Sensordaten 2 und daraus errechneten Grössen zugegriffen werden. Dies dient u. a. zu Diagnosezwecken bei Störungen des Fahrzeugs.

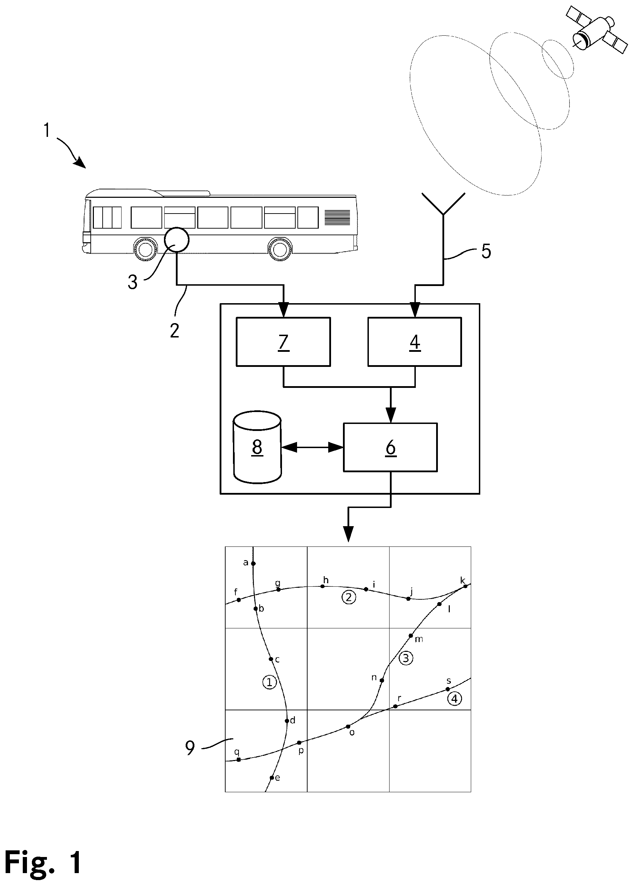

Um die Karte aufzubauen, werden - wie in der Figur 1 schematisch dargestellt - Sensorsignale 2 der ohnehin im Bus 1 verfügbaren Sensoren 3 sowie GPS-Signale 5 ausgewertet. Signale der Sensoren 3 als auch des GPS-Empfängers 4 werden von einem an Bord befindlichen Rechner 6 empfangen, auf welchem ein Programm abläuft, welches wie nachfolgend beschrieben während der Fahrt automatisch die Karte aufbaut und (bei mehrmaligem Durchfahren desselben Streckenabschnitts) selbstlernend aktualisiert. In einer Variante kann der Rechner stationär angeordnet und über eine Datenverbindung mit einem lokalen Kommunikationsgerät an Bord des Busses online verbunden sein.

Der Rechner hat Zugriff auf eine Datenbank 8, in welcher Positionsdaten (Fahrzeugort, Fahrzeugausrichtung, Zeitstempel) sowie anwendungsspezifische Daten abgelegt sind. Diese Daten bilden in ihrer Gesamtheit die Karte 9. Neu eintreffende Daten werden - sofern sinnvoll - mit den bestehenden Daten kombiniert. Namentlich ist eine Kombination dann angezeigt, wenn ein bereits von der Karte 9 abgedeckter Streckenabschnitt erneut befahren wird. Dies reduziert den Speicherbedarf und erleichtert die Auswertung, d. h. die Nutzung der aufgebauten Karte 9 zu Steuerzwecken.

Der Aufbau der Karte 9 umfasst zwei Hauptschritte. Zunächst werden die Sensordaten 2 und GPS-Daten 5 kombiniert, um eine bestmögliche Positionsabschätzung des Fahrzeugs zu erhalten. Dazu wird - wie weiter unten im Detail beschrieben - ein Kalman-Filter eingesetzt. In einem zweiten Schritt wird dann die eigentliche Karte 9 aufgebaut bzw. vervollständigt. Das Programm zur Verarbeitung der erhaltenen Daten ist modular aufgebaut, so dass sich das erste Modul (Positionsabschätzung) und das zweite Modul (Kartenaufbau) bei Bedarf einfach auswechseln lassen.

Für das beschriebene erfindungsgemässe Verfahren werden nur einige Sensorsignale 2 herangezogen, welche bei heutigen Passagierbussen in der Regel verfügbar sind, nämlich:

- die relative Geschwindigkeit des linken Vorderrades in km/h (d. h. die Geschwindigkeitsdifferenz zwischen dem linken Vorderrad und der Vorderachse);

- die relative Geschwindigkeit des rechten Vorderrades in km/h (d. h. die Geschwindigkeitsdifferenz zwischen dem rechten Vorderrad und der Vorderachse);

- die relative Geschwindigkeit des linken Hinterrades in km/h (d. h. die Geschwindigkeitsdifferenz zwischen dem linken Hinterrad und der Hinterachse);

- die relative Geschwindigkeit des rechten Hinterrades in km/h (d. h. die Geschwindigkeitsdifferenz zwischen dem rechten Hinterrad und der Hinterachse);

- die absolute Geschwindigkeit des Fahrzeugs, gemessen an der Vorderachse in km/h; und

- die momentane Drehgeschwindigkeit der Antriebswelle des Fahrmotors in U/min;

Die GPS-Signale 5 sind standardisiert. Im Rahmen des erfindungsgemässen Verfahrens werden folgende Daten benötigt:

- die geografische Breite des Fahrzeugs in Grad;

- die geografische Länge des Fahrzeugs in Grad;

- die Höhe (ü. M.) des Fahrzeugs in Metern;

- die Geschwindigkeit des Fahrzeugs in km/h; und

- die Fahrtrichtung des Fahrzeugs in Grad.

Sowohl die Sensorsignale 2 als auch die GPS-Signale 5 sind mit einem Rauschen behaftet und müssen deshalb gefiltert werden. Dabei kann ausgenutzt werden, dass beide Sätze von Signalen Positionsinformationen umfassen bzw. die Bestimmung von Positionsinformationen ermöglichen, indem ein Zustandsbeobachter eingesetzt wird, im vorliegenden Fall ein Kalman-Filter, um die Signale zu kombinieren. Das entsprechende Verfahren ist weiter unten beschrieben.

Das Resultat des Filters ist ein kontinuierlicher Strom von Positionsschätzungen, welche die räumliche Positionierung des Fahrzeugs in Funktion der Zeit beschreiben. Neue Positionsschätzungen werden beispielsweise mit einem konstanten Takt einmal pro Sekunde erzeugt und ausgegeben. Die Positionsschätzung umfasst letztlich folgende Elemente:

- die globale Position in einem kartesischen Koordinatensystem (easting, northing);

- die Höhe über Meer;

- die Orientierung des Fahrzeugs;

- ein Flag, welches anzeigt, ob Satellitennavigationsdaten zur Ortsbestimmung herangezogen wurden (solche stehen beispielsweise in einem Tunnel nicht zur Verfügung);

- die Zeit;

- das Datum;

- das geodätische Datum bezogen auf die globale Position; und

- die Projektion bezogen auf die globale Position.

Nebst diesen Elementen der Positionsschätzung können jeder Schätzung weitere Parameter zugeordnet werden, namentlich die Antriebsleistung, der momentane Treibstofffluss, die benötigte Leistung für weitere Verbraucher auf dem Fahrzeug, die Aussentemperatur usw.

Die in der Datenbank abgelegte Karte besteht aus einem Satz von Datenpunkten, welche als Knoten bezeichnet werden. Wie in der Graphentheorie üblich, sind diese Knoten mit Kanten miteinander verbunden. Knoten, die genau zwei Kanten aufweisen, stellen Wegpunkte eines Wegabschnitts dar. Knoten mit drei oder mehr Kanten entsprechen Verzweigungen. Knoten, welche nur mit genau einer Kante verbunden sind, sind Sackgassen, Start- oder Endpunkte. Der Satz aller Knoten und Kanten bildet den Graphen, welcher der Karte entspricht.

Strassen werden oft in beiden Richtungen befahren. Für die beschriebene Anwendung ist es wichtig, die Fahrtrichtungen zu unterscheiden, also zu wissen, auf welcher Strassenseite und in welcher Richtung das Fahrzeug unterwegs ist. Dazu wird allen Kanten eine Fahrtrichtung zugeordnet, der Graph ist also gerichtet. Genauer handelt es sich um einen einfachen Digraphen, weil zwei Knoten nicht durch mehr als eine Kante verbunden sein sollen. Schliesslich ist jeder Kante die Anzahl der erfassten Fahrten auf dem entsprechenden Streckenabschnitt zugeordnet. Dies kommt einer Gewichtung der entsprechenden Kanten gleich.

Zur Vereinfachung der Datenspeicherung werden alle Daten, also auch Informationen über die Verbindungen (Kanten) und die Gewichtung, den Knoten zugeordnet. Letztlich sind für jeden Knoten folgende Informationen abgelegt:

- die Identifikationsnummer des Knotens;

- die Positionsabschätzung;

- eine Liste aller Knoten, zu welchen der aktuelle Knoten eine eingehende Verbindung aufweist;

- eine Liste aller Knoten, zu welchen der aktuelle Knoten eine ausgehende Verbindung aufweist;

- Gitterindizes, welche die ungefähre Position des Knotens in der Karte beschreiben;

- die Anzahl von erfassten Fahrbewegungen von diesem Knoten zu nachfolgenden Knoten;

- weitere, anwendungsspezifische Parameter (z. B. ortsabhängige Leistungsdaten, siehe oben).

Die Gitterindizes dienen dabei zum schnellen Auffinden benachbarter Knoten, ohne dass die Positionsabschätzungen herangezogen werden müssen.

Der erste Schritt des Kartenaufbaus ist eine Abtastratenkonvertierung der vom Kalman-Filter erhaltenen zeitbasierten Positionsabschätzungen in distanzbasierte Daten. Anschliessend wird eine Entscheidungskette durchlaufen, um zu bestimmen, in welcher Art und Weise diese positionsbasierten Daten in die Karte aufgenommen werden. Namentlich kann ein neuer Knoten erzeugt werden, wenn der entsprechende Streckenabschnitt bisher nicht kartiert wurde, oder die Daten werden mit den existierenden Daten kombiniert und bestehenden Knoten zugeordnet, namentlich dann, wenn ein Streckenabschnitt erneut befahren wird.

Das Ergebnis ist stets ein gerichteter Graph, dessen gesamte Informationen stets zugänglich sind. Gestützt auf die Verbindungen zwischen den Knoten lassen sich - wie weiter unten im Detail beschrieben - Voraussagen über die zukünftigen Fahrverhältnisse gewinnen.

Wie bereits erwähnt, werden die Sensordaten und die GPS-Signale kombiniert, um verbesserte Positionsschätzungen zu gewinnen. Dazu wird ein Erweiterter Kalman-Filter eingesetzt, wie er beispielsweise in D. Simon, "Optimal State Estimation: Kalman, H Infinity, and Nonlinear Approaches", John Wiley & Sons, Juni 2006 beschrieben ist.

Der Filter liefert eine Abschätzung der globalen Position, der Orientierung und der Geschwindigkeit des Fahrzeugs zum gewünschten Zeitpunkt. Der Vektor der Zustandsvariablen ist wie folgt definiert:

$$\vec{x} = \begin{bmatrix} x & y & z & \theta & v & \delta & \kappa \end{bmatrix}^{\mathsf{T}},$$

wobei *x, y, z* die globale Position in einem kartesischen Koordinatensystem (easting, northing, Höhe) beschreiben. Die Orientierung ist mit $\theta$ bezeichnet, wobei 0° den Norden bezeichnet und der Winkel ausgehend von der Nordrichtung im Uhrzeigersinn gemessen wird. Die (skalare) Geschwindigkeit ist mit *v* bezeichnet. Die zwei weiteren Grössen $\delta, \kappa$ stehen für Modellparameter, welche nicht genau bekannt sind und deshalb vom Filter online bestimmt werden. Die Variable $\delta$ steht in Zusammenhang mit den Unterschieden in den Radien der rechten und linken Räder und wird zur Korrektur der Änderung der Fahrtrichtung eingesetzt. Die Variable $\kappa$ steht für den Radradius dividiert durch das Übersetzungsverhältnis, welches nicht genau bekannt ist und über die Zeit variieren kann.

Die Eingangssignale für den Filter sind definiert als

$$\vec{u} = \begin{bmatrix} \omega & \vartheta^L & \vartheta^R \end{bmatrix}^T,$$

wobei $\omega$ die Rotationsgeschwindigkeit der Antriebsachse des Antriebsmotors bezeichnet und $\vartheta^L, \vartheta^R$ die relativen Geschwindigkeiten des linken bzw. rechten (Vorder-)rades.

Ausgehend vom aktuellen Zustand wird die Geschwindigkeit integriert und eine Vorhersage über die Position des Fahrzeugs generiert. Diese wird dann mit den Messdaten des GPS-Sensors verglichen. Letztere werden als Messdaten des Kalman-Filters angesehen, der entsprechende Vektor ist durch

$$\vec{z} = \begin{bmatrix} \hat{x} & \hat{y} & \hat{z} & \hat{\theta} & \hat{v} \end{bmatrix}^{\mathsf{T}}$$

gegeben.

Das System ist mit Prozessrauschen $\vec{w}$ und Beobachtungsrauschen $\vec{v}$ behaftet:

$$\vec{w} = \begin{bmatrix} \epsilon_\omega & \epsilon_{\vartheta L} & \epsilon_{\vartheta R} & \epsilon_z & \epsilon_\delta & \epsilon_\kappa \end{bmatrix}^{\mathsf{T}},$$

$$\vec{v} = \begin{bmatrix} \epsilon_{\hat{x}} & \epsilon_{\hat{y}} & \epsilon_{\hat{z}} & \epsilon_{\hat{\theta}} & \epsilon_{\hat{v}} \end{bmatrix}^{\mathsf{T}}.$$

Die Komponenten der Vektoren $\vec{w}$ und $\vec{v}$ werden als unabhängige normalverteilte Zufallsvariablen betrachtet.

Die Messsignale werden vor der weiteren Verarbeitung auf ihre Konsistenz hin untersucht. Beispielsweise sollten die relativen Geschwindigkeiten auf beiden Seiten des Fahrzeugs ähnlich sein. Ansonsten schlittert das Fahrzeug, oder die Daten sind fehlerhaft. In beiden Fällen lassen sich die Messsignale nicht sinnvoll weiter verarbeiten. Ferner kann es sein, dass gewisse Sensoren die Messdaten vorverarbeiten und damit verzerren, so setzen elektronische Bremssysteme kleine Werte der Radgeschwindigkeit oft auf Null. Weil diese Grössen zur Berechnung einer Änderung der Fahrtrichtung des Fahrzeugs herangezogen werden, müssen sie korrigiert werden, um falsche Ergebnisse zu vermeiden. Im vorliegenden Verfahren werden die Relativgeschwindigkeiten beispielsweise beide auf Null gesetzt, wenn die Werte einem unrealistischen Zustand entsprechen. Die Rotationsgeschwindigkeit der Antriebsachse kann aber weiterhin im Modell verwendet werden.

Die Verifikation der Satellitennavigationssignale ist anspruchsvoller. Je nach eingesetztem Gerät kann beispielsweise der Verlust einer Signalverbindung zu einem Satelliten zu falschen oder aber eingefrorenen Signalen führen. Ferner sind die ermittelte Kompassrichtung und die Geschwindigkeit bei geringen Fahrgeschwindigkeiten mit starkem Rauschen behaftet. Schliesslich ergeben sich Störungen durch Signalreflektionen, z. B. an hohen Gebäuden. Um solche Fehler erkennen zu können, werden mehrere Validierungsprüfungen vorgenommen. Sie vergleichen im Wesentlichen die Signalwerte mit den vorherigen Werten und den letzten Positionsschätzungen. Im Kalman-Filter wird der Einfluss der Eingangsdaten auf die Zustandsvariable anhand der Varianz der Messdaten gewichtet, d. h. (möglicherweise) fehlerhafte GPS-Daten werden mit einem hohen Wert für die Varianz versehen, so dass der Zustandsvektor nicht falsche Werte annimmt.

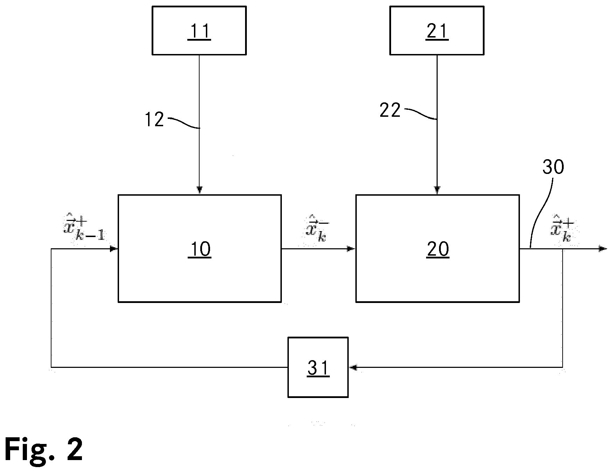

Die Struktur des Positionsabschätzers ist in der Figur 2 dargestellt. Das Fahrzeugmodell 10 dient der Aktualisierung der Zustandsvariable von einem Zeitpunkt *k-1* zu einem Zeitpunkt *k,* und der Signalfilter 20 dient der Aktualisierung der Messung. Das Fahrzeugmodell 10 verarbeitet die Signale 12 der Fahrzeugsensoren 11, der Signalfilter 20 die Messdaten 22 des GPS-Sensors 21. Das Ergebnis ist eine Positionsschätzung 30. Sie wird in einem Speicher 31 abgelegt und dient als Startpunkt für die nächste Aktualisierung der Zustandsvariable.

Der eingesetzte, in der Zeit diskrete erweiterte Kalman-Filter basiert auf folgenden, nichtlinearen System- und Messgleichungen:

$$\vec{x}_k = \vec{f}_{k-1}(\vec{x}_{k-1}, \vec{u}_{k-1}, \vec{w}_{k-1}), \qquad \vec{w}_k \sim \mathcal{N}(0, Q_k),$$

$$\vec{y}_k = \vec{h}_k(\vec{x}_k, \vec{v}_k), \qquad \vec{v}_k \sim \mathcal{N}(0, R_k),$$

wobei *k und k-1* Zeitpunkte repräsentieren. Der Filter wird mit einer Schätzung für den Zustand und die Kovarianz für den Schätzfehler initialisiert:

$$\hat{\vec{x}}_0^+ = \mathrm{E}[\vec{x}_0],$$

$$P_0^+ = \mathrm{Var}(\vec{x}_0).$$

Die Rekursion umfasst zwei Schritte pro Iteration: Eine A-priori-Aktualisierung des Zustands und eine Aktualisierung der Messung. Im ersten Schritt werden die Systemgleichungen vom Zeitpunkt der letzten Messung zum Zeitpunkt der nächsten Messung integriert, im zweiten Schritt wird das System um die beste Schätzung des Zustands linearisiert, wozu die folgenden Matrizen benötigt werden:

$$F_{k-1} = \left.\frac{\partial \vec{f}_{k-1}}{\partial \vec{x}}\right|_{\vec{x}_{k-1} = \hat{x}_{k-1}^+, \vec{w}_{k-1} = 0},$$

$$L_{k-1} = \left.\frac{\partial \vec{f}_{k-1}}{\partial \vec{w}}\right|_{\vec{x}_{k-1} = \hat{x}_{k-1}^+, \vec{w}_{k-1} = 0}.$$

Die zeitliche Aktualisierung der Zustandsschätzung und der Kovarianz des Schätzfehlers sind dann:

$$\vec{x}_k^- = \vec{f}_{k-1}(\vec{x}_{k-1}^+, \vec{u}_{k-1}, 0),$$

$$P_k^- = F_{k-1} P_{k-1}^+ F_{k-1}^\mathsf{T} + L_{k-1} Q_{k-1} L_{k-1}^\mathsf{T},$$

wobei das hochgestellte Minuszeichen signalisiert, dass der Zustand und die Varianz durch das System aktualisiert wurden. Ein hochgestelltes Pluszeichen markiert diejenigen Variablen, welche mit den Messungen im zweiten Schritt des Kalman-Filters angepasst wurden.

Die Integration und Linearisierung wird - basierend auf der Samplezeit des Eingangssignals $\vec{u}$ - wiederholt, bis neue Messdaten $\vec{z}$ eingehen. Anschliessend erfolgt die Aktualisierung der Messung. Dazu wird ein lineares Modell der Messgleichung wie folgt eingesetzt:

$$H_k = \left.\frac{\partial \vec{h}_k}{\partial \vec{x}}\right|_{\vec{x}_{k-1} = \hat{\vec{x}}_{k-1}^-,\ \vec{v}_{k-1} = 0},$$

$$M_k = \left.\frac{\partial \vec{h}_k}{\partial \vec{v}}\right|_{\vec{x}_{k-1} = \hat{\vec{x}}_{k-1}^-,\ \vec{w}_{k-1} = 0}.$$

Die neue beste Schätzung des Zustands und dessen Varianz ergeben sich dann wie folgt:

$$K_k = P_k^+ H_k^\mathsf{T} (H_k P_k^- H_k^\mathsf{T} + M_k R_k M_k^\mathsf{T})^{-1},$$

$$\hat{\vec{x}}_k^+ = \hat{\vec{x}}_k^- + K_k\big(\vec{y}_k - \vec{h}_k(\hat{\vec{x}}_k^-, 0)\big),$$

$$P_k^+ = (I - K_k H_k) P_k^-.$$

Im Folgenden wird der Inhalt der Vektoren und Matrizen im konkreten Beispiel erläutert.

Die zeitliche Änderung der Fahrtrichtung kann auf Basis der Relativgeschwindigkeiten wie folgt berechnet werden:

$$\dot{\theta} = \arctan\left(\frac{\vartheta^L - \vartheta^R}{l}\right),$$

wobei *l* die Achsspurweite bezeichnet. Es hat sich gezeigt, dass Messsignale der Räder der Vorderachse bessere Ergebnisse liefern als diejenigen der Hinterachse. Die Geschwindigkeit des Fahrzeugs und diejenige des Antriebsmotors hängen wie folgt zusammen:

$$v = \kappa \cdot \omega,$$

wobei dies mit der Änderung der Koordinaten x, *y* wie folgt verknüpft ist:

$$\dot{x} = -v \cdot \sin\theta,$$

$$\dot{y} = +v \cdot \cos\theta.$$

Dies führt zur folgenden, in der Zeit diskreten, nichtlinearen Gleichung, welche das System beschreibt:

$$\vec{f}_{k-1} = \begin{bmatrix} x_{k-1} - v_{k-1} \cdot \sin(\theta_{k-1}) \cdot \tau_{k-1} \\ y_{k-1} + v_{k-1} \cdot \cos(\theta_{k-1}) \cdot \tau_{k-1} \\ z_{k-1} + \epsilon_z \\ \theta_{k-1} + \tau_{k-1} \cdot \left(\delta_{k-1} + \arctan\left(\frac{\vartheta_{k-1}^L + \epsilon_{\vartheta L} - \vartheta_{k-1}^R - \epsilon_{\vartheta R}}{l}\right)\right) \\ \kappa_{k-1} \cdot \omega_{k-1} \\ \delta_{k-1} \\ \kappa_{k-1} \end{bmatrix},$$

wobei $\tau_{k-1}$ den zeitlichen Abstand zwischen *k*-1 und *k* angibt.

Weil fünf von sieben Zustandsgrössen direkt gemessen werden können, ergibt sich für die nichtlineare Messgleichung einfach:

$$\vec{h}_k = \begin{bmatrix} \hat{x}_k + \epsilon_{\tilde{x}} \\ \hat{y}_k + \epsilon_{\tilde{y}} \\ \hat{z}_k + \epsilon_{\tilde{z}} \\ \hat{\theta}_k + \epsilon_{\tilde{\theta}} \\ \hat{v}_k + \epsilon_{\tilde{v}} \end{bmatrix}.$$

Daraus ergeben sich die Matrizen *F* und *L,* welche das linearisierte System beschreiben sowie die Matrizen *H* und *M*, welche die Messgleichung linearisieren.

Wie oben angegeben, wird von der Annahme ausgegangen, dass das Prozessrauschen $\vec{w}$ einer multivariaten Normalverteilung um Null mit Kovarianz Q entspricht. Ferner wird angenommen, dass die Rauschsignale voneinander unabhängig sind. Es ergibt sich für Q somit eine symmetrische und positiv-semidefinite Diagonalmatrix, deren Diagonalelemente jeweils das Quadrat der Standardabweichung (bzw. die Varianz) der entsprechenden Grösse enthalten. Das Beobachtungsrauschen $\vec{v}$ ist weisses Rauschen mit Kovarianz R. Dafür ergibt sich eine Diagonalmatrix R analog zu *Q*. Diese ist symmetrisch und positiv definit.

Die Varianz des Prozessrauschens einer Zustandsvariablen drückt das Mass für die Vertrauenswürdigkeit der Zustandsvariable aus. Kleine Werte entsprechen einem mutmasslich korrekten Wert. Folglich müssen Werte für die Varianz der Modellparameter $\delta$ und $\kappa$ gefunden werden, welche zu langsam ändernden aber nicht konstanten Parametern führen. Die Zustandsabschätzung und die Kovarianz des Abschätzungsfehlers werden zwar während der Rekursion aktualisiert. Zunächst muss aber ein Initialisierungswert des Zustands und der Unsicherheit vorgegeben werden. Die Werte der Zustandsvariablen ergeben sich direkt aus den Signalen des Navigationsgeräts. Der Initialisierungswert für den Modellparameter $\delta$ wird auf null gesetzt, für den anderen Modellparameter $\kappa$ auf den nominalen Raddurchmesser geteilt durch das Übersetzungsverhältnis. Die entsprechenden Initialisierungswerte für die Varianz definieren die Diagonale der Matrix $P_0$, die anderen nicht-verschwindenden Einträge beschreiben anfängliche Kreuzkorrelationen, die einen Einfluss der Modellparameter $\delta$ und $\kappa$ auf die assoziierten Zustände $\theta$, bzw. *v* ermöglichen:

$$P_0 = \begin{bmatrix} \sigma_{\tilde{x}_0}^2 & 0 & 0 & 0 & 0 & 0 & 0 \\ 0 & \sigma_{\tilde{y}_0}^2 & 0 & 0 & 0 & 0 & 0 \\ 0 & 0 & \sigma_{\tilde{z}_0}^2 & 0 & 0 & 0 & 0 \\ 0 & 0 & 0 & \sigma_{\tilde{\theta}_0}^2 & 0 & \sigma_{\tilde{\theta}_0 \delta_0}^2 & 0 \\ 0 & 0 & 0 & 0 & \sigma_{\tilde{v}_0}^2 & 0 & \sigma_{\tilde{v}_0 \kappa_0}^2 \\ 0 & 0 & 0 & \sigma_{\tilde{\theta}_0 \delta_0}^2 & 0 & \sigma_{\delta_0}^2 & 0 \\ 0 & 0 & 0 & 0 & \sigma_{\tilde{v}_0 \kappa_0}^2 & 0 & \sigma_{\kappa_0}^2 \end{bmatrix}$$

Wie oben erwähnt, wird die Karte durch einen gerichteten Digraphen dargestellt. Die der Erzeugung der Karte zugrundeliegenden Informationen werden zeitbasiert generiert und liegen demzufolge auch zunächst in Funktion der Zeit vor. Für die Konsolidierung von Daten aus mehreren Durchfahrten derselben Strecke mit verschiedenen Fahrmustern sind aber zeitbasierte Daten schlecht geeignet. Deshalb werden die vom Kalman-Filter generierten, zeitabhängigen Positionsabschätzungen in einem Umwandlungsprozess (Resampling) in (räumlich) äquidistante Daten konvertiert. Die Datenpunkte werden in gleichmässigen Abständen entlang der Trajektorie jeder Durchfahrt der Route erzeugt. Daraus ergibt sich eine hohe Flexibilität und eine gleichbleibende Auflösung. Es wird vermieden, dass in langsam durchfahrenen Streckenabschnitten oder bei Stillstand des Fahrzeugs unnötig viele Knoten erzeugt werden.

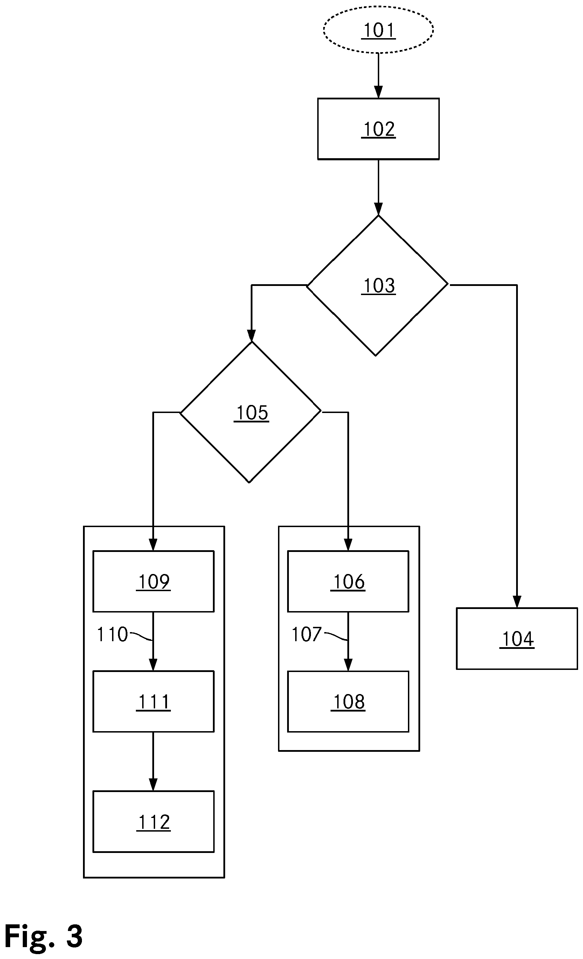

Ausgehend von einer neuen, leeren Karte, wird dieser die erste Positionsabschätzung als erster Knoten hinzugefügt. Anschliessend ergibt sich der in der Figur 3 dargestellte Ablauf. Diese Figur ist ein Flussdiagramm des Resampling-Verfahrens, ausgehend von einer neuen Positionsabschätzung 101. Zunächst wird die Distanz zum letzten besuchten Knoten bestimmt (Schritt 102). Wenn die Distanz geringer ist als die Sampledistanz (Entscheidung 103), wird die Positionsabschätzung 101 einem Puffer hinzugefügt (Schritt 104). Wenn das Fahrzeug stillsteht, wird dieser Puffer mit neuen Positionsabschätzungen gefüllt, welchen verschiedene Sensorsignale zugeordnet sind, z. B. in Bezug auf das Fahrzeuggewicht oder die benötigte Leistung von Zusatzsystemen.

Falls die Distanz grösser ist als die Sampledistanz, wird geprüft, ob der Puffer leer ist (Entscheidung 105). Ist dies der Fall (z. B. bei schneller Fahrt), werden lange Distanzen interpoliert (Schritt 106), so dass sich eine Folge von Positionsabschätzungen 107 ergibt, z. B. entlang einer geraden Linie zwischen dem letzten besuchten Knoten und der Positionsabschätzung. Als Distanz benachbarter Knoten wird beispielsweise ein Wert von 1 m vorgegeben. Diese Positionsabschätzungen 107 der Folge werden dann in die Karte eingefügt (Schritt 108). Sind bereits Daten im Puffer enthalten, werden diese zur Reduktion des statistischen Fehlers gemittelt (Schritt 109), so dass eine mittlere Positionsabschätzung 110 erhalten wird, und der Puffer wird geleert (Schritt 111). Schliesslich wird die mittlere Positionsabschätzung 110 in den letzten besuchten Knoten integriert (Schritt 112). Fährt somit das zuvor stillstehende Fahrzeug los, erfolgt nach dem Erreichen der Sampledistanz die Mittelung der Daten im Puffer und die Speicherung im letzten besuchten Knoten.

Die Integration der Daten schliesst nicht nur die Anpassung der anwendungsspezifischen Parameter ein, sondern namentlich auch die Position des Knotens und natürlich die Anzahl der erfassten Fahrbewegungen.

Bei der Aufnahme neuer Positionsabschätzungen in die Karte werden grundsätzlich zwei Fälle unterschieden:

a) Die Positionsabschätzung gehört zu einem Routenabschnitt, welcher bereits vorher befahren und in der Karte kartiert ist;

b) die Positionsabschätzung gehört zu einem erstmals befahrenen, bisher nicht kartierten Routenabschnitt.

Im zweiten Fall wird die neue Positionsabschätzung als Knoten eingefügt und mit dem letzten besuchten Knoten verknüpft. Im ersten Fall müssen die neuen Daten mit den Daten der bestehenden Knoten geeignet kombiniert werden. Dazu müssen die richtigen bestehenden Knoten identifiziert werden. Dieser Identifikationsprozess wird im Folgenden beschrieben. Er basiert sowohl auf der globalen Position als auch auf der Orientierung des Fahrzeugs. Es werden diejenigen Knoten ermittelt, welche sich nahe an der aktuellen Positionsabschätzung befinden und denen eine ähnliche Fahrzeugorientierung zugeordnet ist. Angesichts der Genauigkeit der üblichen Navigationsgeräte können mehrere Messserien auf derselben Route Trajektorien liefern, die bis zu 10 m voneinander abweichen. Weil die Sample-Distanz in der Regel kleiner gewählt werden muss, ist es nicht sinnvoll, die neuen Positionsabschätzungen mit allen Knoten zu verknüpfen, die eine kleinere Distanz als 10 m aufweisen, denn dies würde die Anzahl der Knoten reduzieren und damit zu Datenverlust führen. Um die Auflösung der Kartendaten zu erhalten, muss eine Auswahl von Kandidaten stattfinden, mit welchen die Information verknüpft werden soll. Ausgehend von einer Menge von Knoten, welche die gegebene Positionsabschätzung umgeben, wird dazu wie folgt vorgegangen:

1. Identifikation umgebender Knoten: Die umgebenden Knoten können mit Hilfe der weiter oben beschriebenen Gitterindizes auf einfache Weise identifiziert werden, beispielsweise alle Knoten in einem Gebiet mit einer Ausdehnung von 50 m x 50 m um die gegebene Positionsabschätzung herum.

2. Entfernung der Spur: Falls ein neuer Routenabschnitt befahren wird, wird der zuletzt besuchte (vorbestehende) Knoten von der weiteren Verarbeitung ausgenommen. Damit wird verhindert, dass Daten, welche dem neuen Routenabschnitt angehören mit dem zuletzt besuchten Knoten kombiniert werden. Dieser Schritt wird übersprungen, wenn sich das Fahrzeug auf einem bereits kartierten Routenabschnitt befindet.

3. Orientierungsfilter: Die neue Positionsabschätzung soll nur mit denjenigen Knoten verknüpft werden, welchen eine ähnliche Orientierung zugeordnet ist. So können insbesondere die zwei Fahrtrichtungen unterschieden werden. Ausserdem ergibt sich eine verbesserte Auflösung von Kreuzungen oder Verzweigungen. Beispielsweise werden alle Knoten ausser Betracht gelassen, deren Orientierung um mehr als 20° von derjenigen der Positionsabschätzung abweicht.

4. Identifikation der nächstliegenden Knoten: Aus den verbleibenden Knoten wird derjenige ausgewählt, welcher der neuen Positionsabschätzung am nächsten liegt. Falls die entsprechende Distanz kleiner ist als 10 m, wird eine Referenz zu diesem Knoten gespeichert. Unabhängig davon wird der Satz der verbleibenden Knoten um diesen Knoten reduziert und um die gesamte Kette der Knoten, welche zu diesem Knoten führen oder von diesem Knoten weiterführen. Dies stellt sicher, dass nur ein einziger Knoten jeder unabhängigen Trajektorie mit der neuen Positionsabschätzung kombiniert wird. Falls nach dieser Prozedur noch Knoten verbleiben, werden die Schritte des Speicherns der Referenz des nächstliegenden Knotens und des Entfernens der Trajektorie wiederholt, und zwar so lange, bis keine Knoten übrig sind.

5. Hinzufügen bzw. Kombinieren von Knoten: Falls der vorangegangene Schritt eine oder mehrere Referenzen ergeben hat, werden diese mit der aktuellen Positionsabschätzung zu einem einzigen Knoten kombiniert. Falls nicht, wird ein neuer Knoten mit der Positionsabschätzung erzeugt und der Karte hinzugefügt. Dieser Knoten ist nun für die weitere Verarbeitung der letzte besuchte Knoten.

Wenn sich aus den neuen Positionsabschätzungen eine Trajektorie ergibt, die in einem Abstand zu einer bestehenden Abfolge von Knoten verläuft, der ungefähr dem Schwellenwert für die Vereinigung mit bestehenden Knoten entspricht, können Bypässe entstehen, die nicht die tatsächliche Situation repräsentieren. Für diese Fälle wird die gebildete Karte durch die nachstehend beschriebene Abfolge von Schritten bereinigt:

6. Entfernen von kurzen Bypässen: Um kurze Bypässe handelt es sich, wenn zwei Verzweigungen, die weniger als ein vorgebbarer Maximalabstand voneinander entfernt sind, zu einem parallelen Verlauf zweier Abfolgen von Knoten führen, wobei die entsprechenden Routenabschnitte einen gewissen Maximalabstand einhalten. Zunächst wird zwischen Haupt- und Nebenästen der Route unterschieden, wobei als Hauptast diejenige Abfolge von Knoten angesehen wird, welche der kürzesten Reiseroute entspricht. Anschliessend werden die Knoten der anderen Abfolge(n) mit denjenigen des Hauptasts vereinigt, wobei jeweils eine Vereinigung mit dem räumlich nächstliegenden Knoten erfolgt. Dabei werden wie üblich alle erfassten Daten mit denjenigen der Knoten des Hauptasts vereinigt.

7. Bereinigen von falschen Verbindungen: Die den einzelnen Knoten zugeordneten Fahrtrichtungen sind grundsätzlich unabhängig voneinander. Weichen sie aber beispielsweise um mehr als 90° voneinander ab, deutet dies auf eine falsche Verbindung zwischen den Knoten hin. Die entsprechenden Knoten und Verbindungen werden bereinigt.

8. Kombinieren von umliegenden Knoten: Eng beieinanderliegende Knoten werden miteinander vereinigt, falls die zugeordneten Fahrtrichtungen im Wesentlichen übereinstimmen (z. B. um nicht mehr als 20° voneinander abweichen).

9. Glätten der Trajektorie: Durch Messungenauigkeiten ergeben sich Abfolgen von Knoten, die ersichtlich nicht den wahren Routenverlauf repräsentieren und z. B. eine gezackte Form aufweisen. Dies lässt sich durch eine Glättung der Trajektorie beheben. Dazu wird eine Abfolge von Knoten mit einer vorgegebenen Länge betrachtet. Die mittlere Krümmung in dieser Abfolge wird bestimmt, und die Positionen der Knoten in der Abfolge werden so korrigiert, dass sich ein im Wesentlichen glatter Verlauf ergibt.

10. Aufteilung langer Kanten: Kanten zwischen zwei benachbarten Knoten, die eine bestimmte Maximallänge überschreiten, werden in mehrere Kanten unterteilt, d. h. es werden zwischen den benachbarten Knoten zusätzliche Knoten interpoliert und eingefügt.

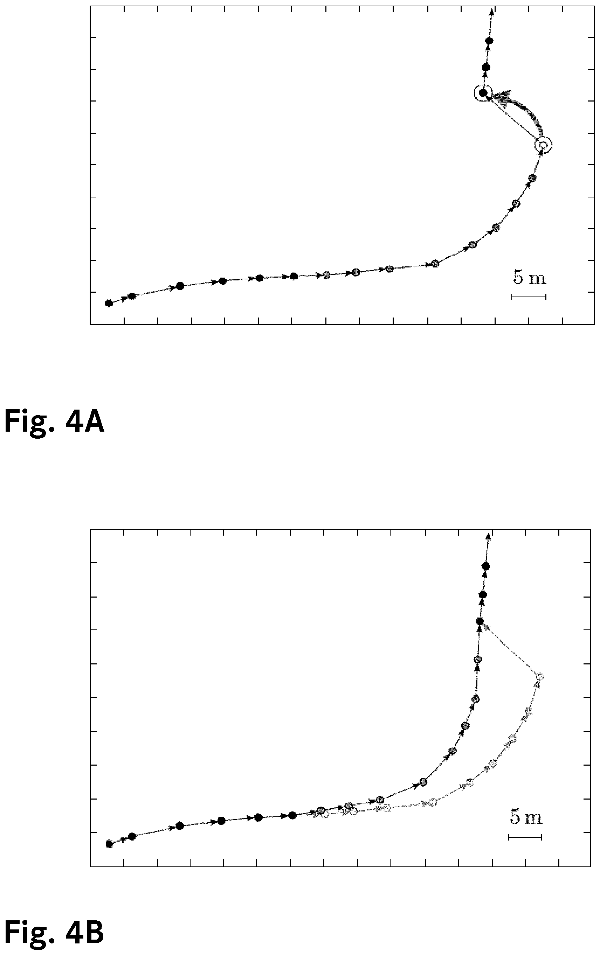

Bei Abschnitten, die in Tunneln verlaufen, wo keine Satellitennavigationsdaten verfügbar sind, wird eine zusätzliche Korrektur vorgenommen. Diese wird im Zusammenhang mit den Figuren 4A, 4B erklärt. Eine allein auf die Fahrzeugsensoren gestützte Positionsbestimmung wird mit wachsender Fahrtstrecke vom wahren Routenverlauf divergieren, was beim Tunnelausgang in der Regel dazu führt, dass die errechnete Position deutlich von der nun erneut durch die Satellitennavigation ermittelten Position abweicht. Es ergibt sich somit beim Tunnelausgang in der erzeugten Karte ein Sprung. Dies wird wie folgt korrigiert:
Die im Tunnel allein auf der Basis der Signale der Fahrzeugsensoren erzeugten Positionsabschätzungen werden nicht bestehenden Knoten zugefügt sondern zunächst wie eine neue Route behandelt. Wenn dann wieder ein Satellitennavigationssignal empfangen wird, erfolgt eine Korrektur dieser neuen Knoten. Anschliessend werden die Knoten nach Möglichkeit mit den bestehenden Knoten vereinigt, analog zu den vorbeschriebenen Verfahrensschritten.
Zur Korrektur der neuen Knoten werden diese und die verbindenden Kanten als Masse-Feder-System aufgefasst, wobei die Knoten die Massenpunkte repräsentieren. Jede Masse ist mit den benachbarten Massen über gelenkig daran befestigte, starre Verbindungsstäbe verbunden (ähnlich wie bei einem Doppelpendel). Zusätzlich sind bei jeder Masse Torsionsfedern an den Enden der Verbindungsstäbe angeordnet. Die Federn sind spannungsfrei, wenn sich die Knoten an den unkorrigierten Positionen befinden. Am Ende der Masse-Feder-Kette wird ein virtueller zusätzlicher Knoten erzeugt. Dieser zusätzliche Knoten wird nun an die Position des anschliessenden Knotens, welche wieder u. a. mittels Satellitennavigation bestimmt wurde, bewegt. Der resultierende Gleichgewichtszustand der Masse-Feder-Kette entspricht dann dem korrigierten Verlauf der Trajektorie. Falls der Routenabschnitt bereits durch Knoten aus früheren Durchfahrten abgebildet ist, lassen sich jetzt die korrigierten Knoten mit den bestehenden Knoten vereinigen.
Bei der Kombination von Positionsdaten aus mehreren Durchfahrten der Route müssen nicht nur die Positionen selbst kombiniert werden, z. B. indem Mittelwerte bestimmt werden, gegebenenfalls gewichtete Mittelwerte. Weil der Zustandsbeobachter für jede Zustandsvariable ein Mass für die Unsicherheit liefert, soll auch diese Information in die Karte einfliessen. Dies gilt nicht nur für die geografischen Daten sondern auch für weitere, anwendungsspezifische Daten, die in die Karte aufgenommen werden. Informationen über die Standardabweichungen liefern eine Angabe über die Wahrscheinlichkeit, dass bei mehrmaligem Durchfahren der Route ähnliche Bedingungen zu erwarten sind, ob z. B. ein Routenabschnitt mutmasslich stets ungefähr mit der gleichen Geschwindigkeit durchfahren wird oder ob diese von Fahrt zu Fahrt stark schwankt. Diese Information kann beim Treffen von Vorhersagen von grossem Nutzen sein.

Die zu kombinierenden Daten werden als normalverteilte Signale beschrieben, damit aufgrund der in der Karte gespeicherten Daten auf einfache Weise und ohne Entscheidvorgänge Vorhersagen ermöglicht werden. Zwei derartige Signale lassen sich wie im Folgenden beschrieben miteinander kombinieren.

Die Normalverteilung einer Variable X mit Mittelwert $\mu$ und Varianz $\sigma^2$ ist eine statische Verteilung mit der folgenden Wahrscheinlichkeitsdichtefunktion:

$$\varphi(x, \mu, \sigma) = \frac{1}{\sigma\sqrt{2\pi}}\, e^{-\frac{(x-\mu)^2}{2\sigma^2}},$$

Ausgehend von einer Wahrscheinlichkeitsdichtefunktion f(x) einer kontinuierlichen Zufallsvariable X ergeben sich der Erwartungswert und die Varianz wie folgt:

$$\mathrm{E}[X] = \mu_X = \int_{-\infty}^{\infty} x\, f(x)\, \mathrm{d}x,$$

$$\mathrm{Var}(X) = \sigma_X^2 = \int_{-\infty}^{\infty} (x - \mu_X)^2 \cdot f(x)\, \mathrm{d}x.$$

Für diskrete Zufallsvariablen ist der Erwartungswert einfach das Mittel der einzelnen Stichproben:

$$\mu_Y = \frac{1}{n}\sum_{i=1}^{n} y_i.$$

Wird eine zusätzliche Stichprobe hinzugefügt, ergibt sich ein neuer Erwartungswert:

$$\bar{\mu}_Y = \frac{1}{n+1}\sum_{i=1}^{n+1} y_i = \frac{1}{n+1}\sum_{i=1}^{n} y_i + \frac{1}{n+1}y_{n+1} = \frac{n\,\mu_Y + y_{n+1}}{n+1}.$$

Ähnliches gilt für die Varianz, welche für diskrete Zufallsvariablen wie folgt definiert ist:

$$\sigma_Y^2 = \frac{1}{n}\sum_{i=1}^{n}(y_i - \mu_Y)^2 = \left(\frac{1}{n}\sum_{i=1}^{n} y_i^2\right) - \mu_Y^2.$$

Für eine zusätzliche Stichprobe ergibt sich für die Varianz:

$$\bar{\sigma}_Y^2 = \frac{1}{n+1}\sum_{i=1}^{n+1}(y_i - \bar{\mu}_Y)^2,$$

$$= \left(\frac{1}{n+1}\sum_{i=1}^{n+1} y_i^2\right) - \left(\frac{1}{n+1}\sum_{i=1}^{n+1} y_i\right),$$

$$= \frac{1}{n+1}\left(\sum_{i=1}^{n} y_i^2 + y_{n+1}^2\right) - \frac{1}{(n+1)^2}\left(\sum_{i=1}^{n} y_i + y_{n+1}\right)^2,$$

wobei wir die obigen Definitionen für den Erwartungswert und die Varianz einsetzen können, um schliesslich folgendes zu erhalten:

$$\bar{\sigma}_Y^2 = \frac{n\,\sigma_Y^2}{n+1} + \frac{n(y_{n+1} - \mu_Y)^2}{(n+1)^2}.$$

Somit werden nur drei Variablen, $\mu_Y$, $\sigma_Y$ und $n$ benötigt, um den Erwartungswert und die Varianz beim Vorliegen neuer Stichproben zu aktualisieren.

Eine Eigenschaft der Karte ist die Möglichkeit der Datenreduktion bei der Berücksichtigung mehrerer Durchfahrten derselben Route. Bei der Kombination zweier bereits gemittelter Pfade, welche dieselbe Route beschreiben, wird von folgenden Normalverteilungen ausgegangen:

$$\varphi(x, \mu_1, \sigma_1) = \frac{1}{\sigma_1\sqrt{2\pi}}\,e^{-\frac{(x-\mu_1)^2}{2\sigma_1^2}},$$

$$\varphi(x, \mu_2, \sigma_2) = \frac{1}{\sigma_2\sqrt{2\pi}}\,e^{-\frac{(x-\mu_2)^2}{2\sigma_2^2}}.$$

Die Verteilung der Kombination, also der Summe der Wahrscheinlichkeitsdichten, ist im Allgemeinen nicht normalverteilt. Es ist aber aus den oben angegebenen Gründen von Vorteil, auch die Kombination wieder durch eine Normalverteilung anzunähern. Mit den obigen Definitionen von Erwartungswert und Varianz ergibt sich

$$\bar{\mu} = \frac{1}{2}\int_{-\infty}^{\infty} x\left(\varphi(x,\mu_1,\sigma_1) + \varphi(x,\mu_2,\sigma_2)\right)\,\mathrm{d}x$$
$$= \tfrac{1}{2}(\mu_1 + \mu_2),$$

$$\bar{\sigma}^2 = \frac{1}{2}\int_{-\infty}^{\infty} (x - \bar{\mu})^2 \cdot \left(\varphi(x,\mu_1,\sigma_1) + \varphi(x,\mu_2,\sigma_2)\right)\,\mathrm{d}x$$
$$= \tfrac{1}{2}(\sigma_1^2 + \sigma_2^2) + \tfrac{1}{4}(\mu_1 - \mu_2)^2.$$

Verallgemeinert auf Kombinationen von $N$ Normalverteilungen, die mit Gewichten $n_i$ gewichtet sind, ergibt sich:

$$\bar{\mu} = \frac{\sum_{i=1}^{N} n_i \cdot \mu_i}{\sum_{i=1}^{N} n_i},$$

$$\bar{\sigma}^2 = \frac{\sum_{i=1}^{N} n_i \cdot \sigma_i^2}{\sum_{i=1}^{N} n_i} + \frac{\sum_{j=1}^{N}\sum_{k=j}^{N}(\mu_j - \mu_k)^2 \cdot n_j n_k}{\left(\sum_{i=1}^{N} n_i\right)^2},$$

wodurch die Normalverteilung der Kombination charakterisiert ist.

Um nun ausgehend von der Karte zukünftige Fahrbedingungen vorhersagen zu können, wird von einer aktuellen Positionsabschätzung ausgegangen. Diese dient als Ausgangspunkt für die Abschätzung, wird aber (anschliessend) auch in die Karte einbezogen, um diese zu aktualisieren. Die Vorhersage wird anhand der Ausgabe von Daten beschrieben, die in einem direkten Zusammenhang mit dem zukünftigen Energiebedarf stehen, namentlich einem Höhenprofil $h$. Das Verfahren überträgt sich aber ohne weiteres auf die Vorhersage weiterer Parameterverläufe.

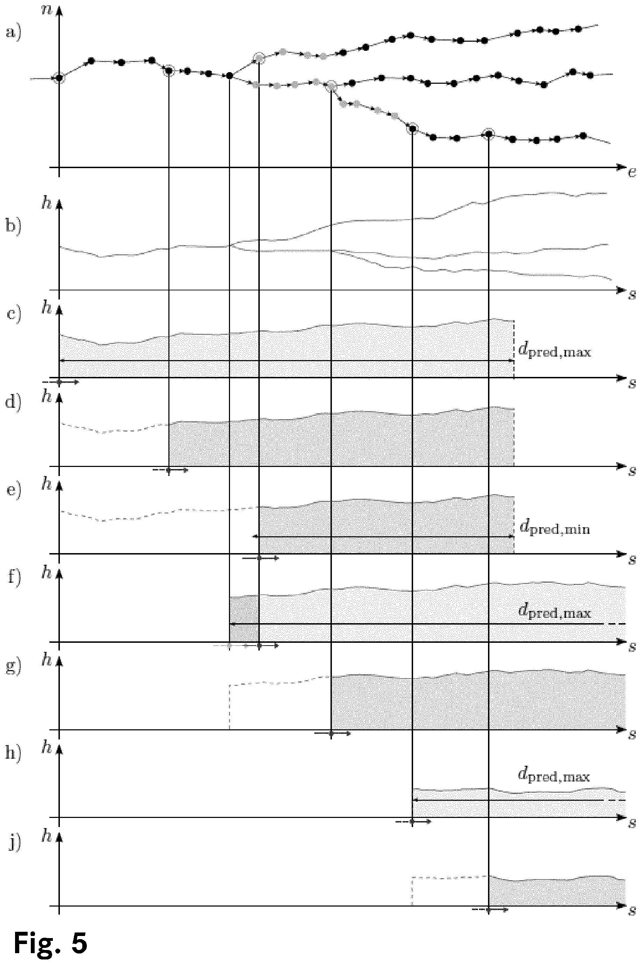

Das Beispiel ist in der Figur 5 grafisch dargestellt, wobei zu beachten ist, dass der Algorithmus auf der zurückgelegten Strecke beruht, was nicht vollständig konsistent ist mit der Darstellung in der Figur 5. Obwohl die Abszisse mit der Fahrstrecke s bezeichnet ist, handelt es sich in Wahrheit nur um die Nordkoordinate der Knoten. Ferner wird angenommen, der dargestellte Kartenabschnitt sei statisch. Dies trifft im realen Fall nicht zu, weil sich die Karte beim erneuten Durchfahren dynamisch ändert.

Die erste Darstellung a) der Figur 5 zeigt einen Kartenabschnitt, in welchem die globalen Positionen der Knoten mit Nord- und Ostkoordinaten n, e dargestellt sind. Betrachten wir nun eine Reihe von Knoten entlang des unteren Asts, wobei ausgehend vom Knoten ganz links der zukünftige Höhenverlauf vorhergesagt werden soll. Die zweite Darstellung b) der Figur 5 zeigt die in der Karte hinterlegten Höhenverläufe einzeln für die drei Äste des Kartenabschnitts, der Einfachheit halber entspricht die Reihenfolge der Kurven von oben nach unten der Reihenfolge der Äste in der Darstellung a). Weil zwei Verzweigungen vorhanden sind und damit drei Äste, muss zunächst eine Mittelung vorgenommen werden, um eine Vorhersage über den zukünftigen Verlauf zu ermöglichen. Das Ergebnis dieser Mittelung der Höhenprofile in einem Vorhersagebereich bis zu einer maximalen Distanz von $d_{pred,max}$ ist in Darstellung c) der Figur 5 festgehalten. Diese einmal errechnete Vorhersage wird dann beim weiteren Durchfahren der Route verwendet (Darstellung d), bis eine minimale Vorhersagedistanz $d_{pred,min}$ erreicht wird. Dies ist bei der Darstellung e) der Figur 5 der Fall. Es wird nun eine neue Vorhersage benötigt, die wiederum eine Strecke von $d_{pred,max}$ abdeckt. Der Knoten, von welchem diese Vorhersage berechnet werden soll, befindet sich am Beginn eines Astes, unmittelbar nach der ersten Verzweigung. Gerade an solchen Stellen sind Fehlzuordnungen von Ästen nicht unwahrscheinlich - in der Tat wird im gezeigten Beispiel die ermittelte Position dem nördlichen Ast (oberer Ast in der Darstellung a) zugeordnet statt richtigerweise dem südlicheren Ast (mittlerer bzw. unterer Ast in der Darstellung a).

Würde nun die Vorhersage ausgehend vom aktuellen Knoten erstellt, würde sie die zukünftigen Fahrbedingungen falsch wiedergeben - der letztendlich richtige Ast wäre gar nicht berücksichtigt. Aus diesem Grund wird beim Treffen einer Vorhersage ausgehend von einer Position, die sich innerhalb eines vorgegebenen Abstands nach einer Verzweigung befindet (hell markierte Knoten in der Figur 5), von einem Knoten ausgegangen, welcher sich vor der davorliegenden Verzweigung befindet (also beispielsweise vom Knoten, in welchem sich der Pfad verzweigt). Diese Vorhersage ist in Darstellung f) der Figur 5 dargestellt. Sie bezieht noch immer alle drei Äste ein, damit auch den richtigen südlichsten Ast. Es ergibt sich erneut derselbe Ablauf. Sobald ein Knoten erreicht wird, welcher sich ausreichend weit von einer vorangehenden Verzweigung befindet, wird - auch wenn die minimale Vorhersagedistanz $d_{pred,min}$ noch nicht erreicht ist, eine neue Vorhersage erzeugt. Dies ist im dargestellten Beispiel in der Darstellung h) der Fall.

Im Prinzip ist es möglich, den Kartenalgorithmus mit dem Navigationsassistenzsystem eines Fahrzeugs zu verbinden. Wenn zum Beispiel der Fahrer seinen Zielort eingibt und das Navigationsassistenzsystem eine Route berechnet, könnte der Kartenalgorithmus diese Routenpunkte dazu verwenden, um die Voraussage zu verbessern. Dies ist insbesondere hilfreich, wenn die Karte viele Kreuzungen und Abzweigungen enthält - die Mittelung über mehrere mögliche Äste kann so entfallen, es wird jeweils derjenige Ast berücksichtigt, welcher mit hoher Wahrscheinlichkeit befahren werden wird. Nebst einer verbesserten Prädiktion muss die Voraussage viel weniger oft aktualisiert werden, da die Knotenabfolge im Vorhinein bekannt ist. Die selbstlernende Karte wird dadurch keineswegs ersetzt, da das Navigationsassistenzsystem nicht in der Lage ist, den gleichen fahrer- und fahrzeugspezifischen Datensatz zu liefern.

Im Einsatz in öffentlichen Verkehrsmitteln ist die Kombination von selbstlernender Karte mit einem Fahrassistenzsystem noch einfacher. Gibt der Fahrer die aktuelle Buslinie an, kann diese Information intrinsisch in die Karte eingebaut werden, so dass bei einer Voraussage zukünftiger Fahrbedingungen die Kartenparameter bereits klar der Linie zugewiesen sind und somit eindeutig abgefragt werden können.

Die erzeugte Karte und das Verfahren zum Treffen von Vorhersagen lassen sich insbesondere im Rahmen eines strassengebundenen öffentlichen Verkehrsmittels einsetzen, z. B. eines Batterie- oder Hybridbusses. Sie lassen sich beispielsweise im Rahmen einer Energieverwaltung einsetzen, wie sie in der Dissertation von P. Elbert, "Noncausal and Causal Optimization Strategies for Hybrid Electric Vehicles", Diss. ETH No. 21522, Eidgenössische Technische Hochschule, Zürich, Mai 2013, beschrieben ist. Darin wird eine stochastische Darstellung des Fahrverhaltens herangezogen, um eine möglichst energiesparende Steuerung eines Hybridbusses zu erreichen. Eine übliche Ladesteuerung kann den zukünftigen Energieverbrauch, z. B. aufgrund der Topographie, nicht vorhersagen, und muss deshalb einen relativ hohen Ladezustand vorhalten, um mögliche Steigungen bewältigen zu können. Dies kann zur Folge haben, dass in einem nachfolgenden Gefälle nicht die eigentlich zur Verfügung stehende Energie rekuperiert werden kann. Falls nun eine Vorhersage verfügbar ist, kann der Ladezustand so gesteuert werden, dass die maximale Rekuperationsenergie zwischengespeichert werden kann. Die erfindungsgemässe Karte kann die Basis für eine solche Vorhersage bilden. Auf der Basis der Karte kann beispielsweise die Antriebsleistung und die Fahrzeuggeschwindigkeit vorhergesagt werden. Auf der Basis dieser Grössen kann dann die Ladesteuerung erfolgen.

Die Erfindung ist nicht auf das dargestellte Ausführungsbeispiel beschränkt. Es kann beispielsweise von Vorteil sein, wenn nicht nur die oben genannten GPS-Daten in die Auswertung einbezogen werden, sondern zusätzlich auch Abschätzungen des GPS-Empfängers über eine Genauigkeit der GPS-Daten. Derartige Werte, so genannte "dilution of precision"-Werte (DOP-Werte) können herangezogen werden, um die Positionsabschätzung zu verbessern.

Zusätzlich zum GPS-Empfänger und den genannten Sensoren kann zudem ein Sensor zur genaueren Feststellung der Höhe zum Einsatz kommen - der GPS-Empfänger liefert in Bezug auf diesen Parameter oft nur ungenaue Ergebnisse. Eine genaue Kenntnis der Höhe erleichtert den Kartenaufbau an Stellen, wo sich mehrere Routen auf verschiedener Höhe überkreuzen.

Beim oben genannten Verfahren ist die Modellierung der Kartenparameter als normalverteilte Grössen die einschneidendste Vereinfachung. Dies führt dazu, dass beispielsweise verschiedene Arten des Durchfahrens eines Streckenabschnitts (z. B. in Stosszeiten verglichen mit Randzeiten mit wenig Verkehr) nicht spezifisch erfasst sind, bekannt sind nur die Mittelwerte der einzelnen Grössen und die entsprechenden Standardabweichungen. Die Annäherung durch Normalverteilungen führt zu einer signifikanten Reduktion der zu verarbeitenden Daten und zu einer Vereinfachung der Verarbeitung und des Treffens von Vorhersagen. Es ist aber denkbar, dass die gesammelten Daten anders repräsentiert werden. Beispielsweise könnten statt einer einzigen Normalverteilung pro Signal mehrere Normalverteilungen erfasst werden, welche die Grösse an verschiedenen Wochentagen, zu verschiedenen Tageszeiten und/oder zu verschiedenen Jahreszeiten repräsentieren. Zusätzlich sollten ältere Ereignisse, die vergangen sind und keine Relevanz mehr haben, automatisch vom Kartenalgorithmus vergessen werden. Dadurch bleibt die Karte dynamisch und bildet folglich die aktuelle Realität ab. Vom technischen Aspekt her bedeutet dies, dass eine gewisse Anzahl von Datenpunkten pro Kartenparameter gespeichert wird und die ältesten Daten durch neue Daten ersetzt werden. Um gleichzeitig die neueren Daten stärker zu gewichten, kann ein sogenannter Vergessensfaktor verwendet werden. Damit kann zum Beispiel eine gewichtete Summe, ein gewichteter Mittelwert, oder eine gewichtete Standardabweichung einer Normalverteilung berechnet werden. Im Rahmen der Erfindung sind aber auch ganz andere Darstellungen der Kartenparameter möglich.

Das beschriebene Verfahren ist grundsätzlich dazu in der Lage, gleichzeitig und in Echtzeit in dieselbe Karte Informationen von verschiedenen Fahrzeugen zu integrieren. Dies ermöglicht einen schnelleren Kartenaufbau und eine zeitnähere Aktualisierung - und damit auch Vorhersagen, die auf den aktuellen Gegebenheiten im Streckennetz basieren. Dies funktioniert ohne weiteres, wenn die Daten räumlich voneinander beabstandete Fahrzeuge betreffen. Wenn Daten nahe beieinander befindlicher Fahrzeuge integriert werden müssen, sind an sich bekannte Massnahmen zur Speicherabsicherung zu treffen, damit keine Konflikte entstehen.

Zusammenfassend ist festzustellen, dass durch die Erfindung ein Verfahren geschaffen wird, welches eine zuverlässige Vorhersage zukünftiger Fahrbedingungen für ein Fahrzeug ermöglicht.

## Patentansprüche

1.  Verfahren zur Vorhersage zukünftiger Fahrbedingungen für ein Fahrzeug, umfassend folgende Schritte:

    a) Sammeln von Sensordaten mittels Sensoren an Bord des Fahrzeuges, während des Befahrens einer Route durch das Fahrzeug;
    b) Bestimmen einer Position des Fahrzeugs;
    c) Zuordnen der gesammelten Daten zur bestimmten Fahrzeugposition;
    d) Erstellen einer Karte in Abhängigkeit der zugeordneten Daten;
    e) erneutes Befahren der Route, wobei die Karte in Abhängigkeit von zugeordneten Daten aus dem erneuten Befahren in Echtzeit aktualisiert wird;
    f) Gewinnen einer Vorhersage zukünftiger Fahrbedingungen, beim erneuten Durchfahren der Strecke basierend auf der bestimmten Fahrzeugposition und der Karte;
    **dadurch gekennzeichnet, dass**
    die Karte durch einen gerichteten Graphen dargestellt wird, wobei jedem Knoten des Graphen zugeordnete Daten zugewiesen werden; und dass
    für jeden neuen Satz zugeordneter Daten in Abhängigkeit einer Distanz zu einem letzten besuchten Knoten des Graphen und eines Inhalts eines Datenpuffers

    - der Satz zugeordneter Daten als Eintrag dem Datenpuffer hinzugefügt wird, wenn die Distanz einen vorgegebenen Wert unterschreitet,
    - der Satz zugeordneter Daten dem letzten besuchten Knoten hinzugefügt wird, wobei ein Eintrag oder mehrere Einträge im Datenpuffer mit geeigneter Mittelung dem letzten besuchten Knoten hinzugefügt werden, wenn die Distanz den vorgegebenen Wert überschreitet und der Datenpuffer mindestens einen Eintrag aufweist, oder
    - ein neuer Knoten erzeugt wird, wenn die Distanz den vorgegebenen Wert überschreitet und der Datenpuffer leer ist.

2.  Verfahren nach Anspruch 1, **dadurch gekennzeichnet, dass** die Karte ortsabhängige Leistungsdaten umfasst.

3.  Verfahren nach Anspruch 1 oder 2, **dadurch gekennzeichnet, dass** die Aktualisierung der Karte das Konsolidieren von Daten aus verschiedenen Fahrten auf der Route umfasst.

4.  Verfahren nach einem der Ansprüche 1 bis 3, **dadurch gekennzeichnet, dass** die gesammelten Sensordaten ortsrelevante Informationen umfassen und dass die gesammelten Daten und Daten eines globalen Positionierungssystems zur Bestimmung der Fahrzeugposition kombiniert, insbesondere mittels eines Kalman-Filters verarbeitet, werden.

5. Verfahren nach einem der Ansprüche 1 bis 4, **dadurch gekennzeichnet, dass** die zugeordneten Daten eine Fahrzeugorientierung und eine Fahrzeuggeschwindigkeit umfassen.

6. Verfahren nach den Ansprüchen 4 und 5, **dadurch gekennzeichnet, dass** die Sensordaten Geschwindigkeiten eines rechten und eines linken Rads umfassen und dass ausgehend von den Geschwindigkeiten eine Änderungsrate der Fahrzeugorientierung errechnet wird.

7. Verfahren nach einem der Ansprüche 1 bis 6, **dadurch gekennzeichnet, dass** beim Überschreiten einer vorgegebenen Maximaldistanz zum letzten besuchten Knoten mindestens zwei neue Knoten erzeugt werden, wobei einem ersten der mindestens zwei neuen Knoten ein Satz interpolierter Daten zugeordnet wird.

8. Verfahren nach einem der Ansprüche 1 bis 7, **dadurch gekennzeichnet, dass** in Abhängigkeit der bestimmten Fahrzeugposition und der Karte eine Vorhersage von zukünftigen ortsabhängigen Parametern auf der befahrenen Route getroffen wird, wobei die Vorhersage ausgehend von einem Knoten des gerichteten Graphen getroffen wird, welcher der bestimmten Fahrzeugposition entspricht.

9. Verfahren nach Anspruch 8, **dadurch gekennzeichnet, dass** die Vorhersage sich über einen Vorhersagebereich erstreckt, welcher eine Mehrzahl von Knoten des gerichteten Graphen überdeckt, wobei im Fall, dass sich der Vorhersagebereich über eine Verzweigung des gerichteten Graphen hinaus erstreckt, Knoten mehrerer an die Verzweigung anschliessender Äste für das Treffen der Vorhersage berücksichtigt werden.

10. Verfahren nach Anspruch 9, **dadurch gekennzeichnet, dass** eine neue Vorhersage nur dann getroffen wird, wenn der Vorhersagebereich einer bereits getroffenen Vorhersage nicht mindestens einen minimalen Routenabschnitt ausgehend von der bestimmten Fahrzeugposition überdeckt und dass ansonsten eine bereits getroffene Vorhersage weiter verwendet wird.

11. Verfahren nach Anspruch 9 oder 10, **dadurch gekennzeichnet, dass** eine neue Vorhersage ausgehend von einem Knoten getroffen wird, welcher sich vor einer Verzweigung des gerichteten Graphen befindet, wenn sich der der bestimmten Fahrzeugposition entsprechende Knoten in einem vorgegebenen Abstandsbereich nach der Verzweigung befindet.

12. Verfahren zur Steuerung eines Fahrzeugs, umfassend folgende Schritte:

a) Gewinnen einer Vorhersage zukünftiger Fahrbedingungen während des Befahrens einer Route durch das Fahrzeug, mittels Durchführen des Verfahrens nach einem der Ansprüche 1 bis 11;
b) Steuern des Fahrzeugs anhand der Vorhersage beim erneuten Durchfahren der Route basierend auf einer bestimmten Fahrzeugposition.

13. Verfahren nach Anspruch 12, **dadurch gekennzeichnet, dass** das Fahrzeug ein Oberleitungsbus mit einer Speicherbatterie zur Zwischenspeicherung von elektrischer Energie ist.

14. Verfahren nach Anspruch 12 oder 13, **dadurch gekennzeichnet, dass** die Steuerung des Fahrzeugs das automatische Schalten eines Schaltgetriebes und/oder die Ausgabe von Fahrerassistenzinformationen umfasst.

**Claims**

1. A method for predicting future driving conditions for a vehicle, comprising the following steps:

a) gathering sensor data using sensors on board the vehicle, while the vehicle is traveling on a route;
b) determining a position of the vehicle;
c) associating the gathered data with the determined vehicle position;
d) creating a map depending on the associated data;
e) traveling the route again, the map being updated in real time depending on associated data from the repeated traveling;
f) obtaining a prediction of future driving conditions when the route is traveled again, based on the determined vehicle position and the map;
**characterized in that**
the map is depicted by a directed graph, wherein associated data are assigned to each node of the graph; and **in that**
for each new set of associated data, depending on a distance from a last visited node of the graph and on content of a data buffer

- the set of associated data is added as an entry to the data buffer, when the distance falls below a certain predefined value,
- the set of associated data is added to the last visited node, wherein an entry or several entries are added to the data buffer with suitable averaging to the last visited node, when the distance exceeds the predefined value and the data buffer contains at least one entry, or
- a new node is generated, if the distance exceeds the predefined value and the data buffer is empty.

2. The method as claimed in claim 1, **characterized in that** the map comprises location-dependent power data.

3. The method as claimed in claim 1 or 2, **characterized in that** updating the map comprises consolidating data from various journeys on the route.

4. The method as claimed in one of claims 1 to 3, **characterized in that** the gathered sensor data comprise location-relevant information, and **in that** the gathered data and data from a global positioning system for determining the vehicle position are combined, in particular processed by way of a Kalman filter.

5. The method as claimed in one of claims 1 to 4, **characterized in that** the associated data comprise a vehicle orientation and a vehicle speed.

6. The method as claimed in claims 4 and 5, **characterized in that** the sensor data comprise speeds of a right-hand wheel and of a left-hand wheel, and **in that** a rate of change of the vehicle orientation is calculated from the speeds.

7. The method as claimed in one of claims 1 to 6, **characterized in that**, when a predefined maximum distance from the last visited node is exceeded, at least two new nodes are generated, wherein a set of interpolated data is associated with a first of the at least two new nodes.

8. The method as claimed in one of claims 1 to 7, **characterized in that**, depending on the determined vehicle position and the map, a prediction of future location-dependent parameters on the traveled route is made, wherein the prediction is made starting from a node of the directed graph that corresponds to the determined vehicle position.

9. The method as claimed in claim 8, **characterized in that** the prediction extends over a prediction range that covers a multiplicity of nodes of the directed graph, wherein, in the event that the prediction range extends beyond a branch of the directed graph, nodes of a plurality of branch portions adjoining the branch are taken into consideration to make the prediction.

10. The method as claimed in claim 9, **characterized in that** a new prediction is made only when the prediction range of a prediction that has already been made does not cover at least a minimum route section starting from the determined vehicle position and **in that** otherwise a prediction that has already been made continues to be used.

11. The method as claimed in claim 9 or 10, **characterized in that** a new prediction is made starting from a node that is situated before a branch in the directed graph if the node corresponding to the determined vehicle position is situated in a predefined distance range after the branch.

12. A method for controlling a vehicle, comprising the following steps:

a) obtaining a prediction of future driving conditions when a route is traveled by the vehicle, carrying out the method as claimed in one of claims 1 to 11.
b) controlling the vehicle when the route is traveled again, according to the prediction, based on a determined vehicle position.

13. The method as claimed in claim 12, **characterized in that** the vehicle is a trolleybus having a storage battery for the buffer storage of electrical energy.

**14.** The method as claimed in claim 12 or 13, **characterized in that** the control of the vehicle comprises automatically switching a transmission and/or outputting driver assistance information.


**Revendications**

**1.** Procédé permettant de prédire des conditions de conduite futures pour un véhicule, comprenant les étapes suivantes consistant à :

a) collecter des données de capteur au moyen de capteurs à bord du véhicule pendant que le véhicule parcourt un itinéraire ;
b) déterminer une position du véhicule ;
c) associer les données collectées à la position de véhicule déterminée ;
d) créer une carte en fonction des données associées ;
e) parcourir à nouveau l'itinéraire, la carte étant mise à jour en temps réel en fonction de données associées résultant du nouveau parcours ;
f) obtenir une prévision de conditions de conduite futures lors du nouveau passage par le trajet sur la base de la position de véhicule déterminée et de la carte ;
**caractérisé en ce que**
la carte est représentée par un graphe orienté, des données associées étant attribuées à chaque nœud du graphe ; et **en ce que**
pour chaque nouveau jeu de données associées, en fonction d'une distance par rapport à un nœud fréquenté en dernier du graphe et d'un contenu d'un tampon de données,

- le jeu de données associées est ajouté sous forme d'entrée au tampon de données si la distance soupasse une valeur prédéfinie,
- le jeu de données associées est ajouté au nœud fréquenté en dernier, une entrée ou plusieurs entrées dans le tampon de données avec un calcul de moyenne approprié étant ajoutée(s) au nœud fréquenté en dernier si la distance dépasse la valeur prédéfinie et le tampon de données présente au moins une entrée, ou
- un nouveau nœud est généré si la distance dépasse la valeur prédéfinie et le tampon de données est vide.

**2.** Procédé selon la revendication 1, **caractérisé en ce que** la carte comprend des données de performance localisées.

**3.** Procédé selon la revendication 1 ou 2, **caractérisé en ce que** la mise à jour de la carte comprend la consolidation de données provenant de différents déplacements sur l'itinéraire.

**4.** Procédé selon l'une quelconque des revendications 1 à 3, **caractérisé en ce que** les données de capteur collectées comprennent des informations concernant le lieu, et **en ce que** les données collectées et des données d'un système de positionnement global sont combinées pour déterminer la position de véhicule, en particulier traitées au moyen d'un filtre de Kalman.

**5.** Procédé selon l'une quelconque des revendications 1 à 4, **caractérisé en ce que** les données associées comprennent une orientation de véhicule et une vitesse de véhicule.

**6.** Procédé selon l'une quelconque des revendications 4 et 5, **caractérisé en ce que** les données de capteur comprennent des vitesses d'une roue droite et d'une roue gauche, et **en ce qu'**un taux de changement de l'orientation de véhicule est calculé en partant des vitesses.

**7.** Procédé selon l'une quelconque des revendications 1 à 6, **caractérisé en ce qu'**en cas de dépassement d'une distance maximale prédéfinie par rapport au nœud fréquenté en dernier, au moins deux nouveaux nœuds sont générés, un jeu de données interpolées étant associé à un premier des au moins deux nouveaux nœuds.

**8.** Procédé selon l'une quelconque des revendications 1 à 7, **caractérisé en ce qu'**en fonction de la position de véhicule déterminée et de la carte, une prévision de paramètres localisés futurs sur l'itinéraire parcouru est faite, la prévision étant faite en partant d'un nœud du graphe orienté qui correspond à la position de véhicule déterminée.

**9.** Procédé selon la revendication 8, **caractérisé en ce que** la prévision s'étend sur une plage de prévision qui couvre une pluralité de nœuds du graphe orienté, dans lequel, au cas où la plage de prévision s'étendrait au-delà d'un branchement du graphe orienté, des nœuds de plusieurs branches consécutives au branchement seraient pris en compte pour faire la prévision.

**10.** Procédé selon la revendication 9, **caractérisé en ce qu'**une nouvelle prévision n'est faite que si la plage de prévision d'une prévision déjà faite ne couvre pas au moins une section d'itinéraire minimale en partant de la position de véhicule déterminée, et **en ce que** sinon on continue à utiliser une prévision déjà faite.

**11.** Procédé selon la revendication 9 ou 10, **caractérisé en ce qu'**une nouvelle prévision est faite en partant d'un nœud qui se trouve avant un branchement du graphe orienté si le nœud correspondant à la position de véhicule déterminée se trouve dans une plage de distance prédéfinie après le branchement.

**12.** Procédé de commande d'un véhicule, comprenant les étapes suivantes consistant à :

a) obtenir une prévision de conditions de conduite futures pendant que le véhicule parcourt un itinéraire, par l'exécution du procédé selon l'une quelconque des revendications 1 à 11 ;
b) commander le véhicule à l'aide de la prévision lors du nouveau passage par l'itinéraire sur la base d'une position de véhicule déterminée.

**13.** Procédé selon la revendication 12, **caractérisé en ce que** le véhicule est un trolleybus doté d'un accumulateur pour le stockage temporaire d'énergie électrique.

**14.** Procédé selon la revendication 12 ou 13, **caractérisé en ce que** la commande du véhicule comprend l'actionnement automatique d'une boîte de vitesses et/ou la sortie d'informations d'assistance au conducteur.

**Fig. 1**

**Fig. 2**

**Fig. 3**

**Fig. 4A**

**Fig. 4B**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011117025 A1
- EP 2876620 A1
- WO 2009098071 A1
- US 2016238396 A1, TomTom

**In der Beschreibung aufgeführte Nicht-Patentliteratur**

- **D. AMBÜHL ; L. GUZZELLA.** Predictive Reference Signal Generator for Hybrid Electric Vehicles. *IEEE Transactions on Vehicular Technology,* November 2009, vol. 58 (9
- **D. SIMON.** Optimal State Estimation: Kalman, H Infinity, and Nonlinear Approaches. John Wiley & Sons, Juni 2006
- **P. ELBERT.** Noncausal and Causal Optimization Strategies for Hybrid Electric Vehicles. *Diss. ETH No. 21522, Eidgenössische Technische Hochschule,* Mai 2013